# EUROPEAN PATENT APPLICATION

(11) **EP 2 141 930 A1**
(43) Date of publication of application: **06.01.2010**
(21) Application number: 08738467.3
(22) Date of filing: 03.04.2008
(51) Int. Cl.: H04N 7/32

(54) **MOTION DETECTION APPARATUS, MOTION DETECTION METHOD, AND MOTION DETECTION PROGRAM**

(30) Priority: 26.04.2007 JP 2007116949
(71) Applicant: Panasonic Corporation, Kadoma-shi Osaka 571-8501 (JP)
(72) Inventor: OKADA, Kohei, Chuo-Ku, Osaka 540-6207 (JP); IGUCHI, Masayasu, Chuo-Ku, Osaka 540-6207 (JP); TAKAHASHI, Jun, Chuo-Ku, Osaka 540-6207 (JP)
(74) Representative: Kügele, Bernhard
(86) International application number: PCT/JP2008/000855
(87) International publication number: WO 2008/136178

(57) **Abstract**

A motion estimation device executes motion estimation for a macroblock in a current picture, using pixel data of a reference picture in a multi-frame memory (504), including the following elements. A local memory (702) holds a part of the pixel data. The part is in a first range from which motion is estimated in first motion estimation, and read out from the multi-frame memory (504). A common motion estimation unit (704) executes the first motion estimation using pixel data in the part held in the local memory (702). A direct motion estimation unit (108) executes the second motion estimation using pixel data in the pixel data of the reference picture by an algorithm different from that of the first motion estimation. The pixel data used by the direct motion estimation unit (108) is included in a second range which includes the first range and is larger than the first range.

## Description

### Technical Field

The present invention relates to moving picture coding, and more particularly to a motion estimation integrated circuit, a motion estimation method, a motion estimation device, and a motion estimation program which execute motion estimation for moving picture coding.

### Background Art

Recently, with the arrival of the age of multimedia in which audio, video and other data are integrally handled, existing information media, i.e., newspapers, journals, TVs, radios and telephones and other means through which information is conveyed to people has come under the scope of multimedia. Generally speaking, multimedia refers to something that is represented by associating not only characters but also graphics, audio and especially images and the like together. However, in order to include the aforementioned existing information media in the scope of multimedia, it appears as a prerequisite to represent such information in digital form.

However, when estimating the amount of information contained in each of the aforementioned information media as the amount of digital information, the information amount per character requires 1 to 2 bytes. On the other hand, the audio requires more than 64 Kbits (telephone quality) per second, and when it comes to the moving picture, it requires more than 100 Mbits (present television reception quality) per second. Therefore, it is not realistic for the information media to handle such an enormous amount of information as it is in digital form. For example, although video phones are already in the actual use via Integrated Services Digital Network (ISDN) which offers a transmission speed of 64 Kbit/s to 1.5 Mbit/s, it is impossible to transmit images on televisions and images taken by cameras directly through ISDN.

This therefore requires information compression techniques, and for instance, in the case of the videophone, video compression techniques compliant with H.261 and H.263 standards recommended by International Telecommunication Union-Telecommunication Standardization Sector (ITU-T) are employed. According to the information compression techniques compliant with the MPEG-1 standard, image information as well as audio information can be recorded in an ordinary music Compact Disc (CD).

Here, Moving Picture Experts Group (MPEG) is an international standard for compression of moving picture signals standardized by International Standards Organization/International Electrotechnical Commission (ISO/IEC). MPEG-1 is a standard to compress moving picture signals down to 1.5 Mbps, that is, to compress information of TV signals approximately down to a hundredth. The transmission rate within the scope of the MPEG-1 standard is set to about 1.5 Mbps to achieve the middle-quality picture, therefore, MPEG-2 which was standardized with the view to meet the requirements of high-quality picture allows data transmission of moving picture signals at a rate of 2∼15 Mbps to achieve the quality of TV broadcasting. Recently, a working group (ISO/IEC JTC1/SC29/WG11) in the charge of the standardization of the MPEG-1 and the MPEG-2 has achieved a compression rate which goes beyond what the MPEG-1 and the MPEG-2 have achieved, further enabled coding/decoding operations on a per-object basis and standardized MPEG-4 in order to realize a new function required by the era of multimedia. In the process of the standardization of the MPEG-4, the standardization of coding method for a low bit rate was aimed. However, the aim is presently extended to a more versatile coding including coding of interlaced pictures and coding at high bit rate.

Furthermore, MPEG-4 AVC and H.264 have been developed and standardized since 2003 as a picture coding method with higher compression rate, which are jointly worked by the ISO/IEC and the ITU-T. Currently, regarding H.264, a revised standard in compliance with a High Profile which is suited for High Definition (HD) pictures have been developed. As applications assumed in compliance with H.264 standard, like in the cases of the MPEG-2 and MPEG-4, the applications have been extended to digital broadcast, a Digital Versatile Disk (DVD) player/recorder, a hard disc player/recorder, a camcorder, a video phone and the like.

In general, in coding of a moving picture, the amount of information is compressed by reducing redundancy in temporal and spatial directions. Therefore, an inter-picture prediction coding, which aims at reducing the temporal redundancy, estimates a motion and generates a predictive picture on a block-by-block basis with reference to prior and/or subsequent pictures, and then codes a differential value between the obtained predictive picture and a current picture to be coded. Here, "picture" is a term to represent a single screen and it represents a frame when used for a progressive picture whereas it represents a frame or fields when used for an interlaced picture. The interlaced picture here is a picture in which a single frame consists of two fields respectively having different time. For encoding and decoding an interlaced picture, a single frame can be processed either as a frame, as two fields or as a frame/field structure depending on a block in the frame.

A picture to which an intra-picture prediction coding is performed without reference pictures is referred to as an "I-picture". A picture to which the inter-picture prediction coding is performed with reference to a single picture is referred to as a "P-picture". A picture to which the inter-picture prediction coding is performed by referring simultaneously to two pictures is referred to as a "B-picture". When performing inter-picture prediction coding for the B-picture, the B-picture can refer to two pictures, selected from the pictures whose display time is either forward or backward to that of a current picture to be coded, as an arbitrary combination. Whereas the reference pictures can be specified for each macroblock that is a fundamental unit of coding, they are distinguished as a first reference picture and a second reference picture. Here, the first reference picture is a first reference picture to be described firstly in a coded bit stream and the second reference picture is a reference picture to be described after the first reference picture in the coded bit stream. However, the reference pictures need to be already coded as a condition to code these I-picture, P-picture, and B-picture.

A motion compensation inter-picture prediction coding is used for coding the P-picture or the B-picture. The motion compensation inter-picture prediction coding is a coding method which adopts motion compensation to an inter-picture prediction coding. The motion compensation is a method of reducing the amount of data while increasing prediction precision by estimating an amount of motion (this is referred to as a motion vector, hereinafter) of each part in a picture and performing prediction in consideration of the estimated amount of data, instead of simply predicting a pixel value of a current picture from a pixel value of a reference frame. For example, the amount data is reduced by estimating a motion vector of a current picture to be coded, and coding a predictive difference between a predicted value at a position shifted as much as the estimated motion vector and a pixel value of the current picture. Since this method requires information about the motion vector at the time of decoding, the motion vector is also coded, and recorded or transmitted.

The motion vector is estimated on a macroblock basis. Specifically, a motion vector is estimated by fixing a macroblock (base block) of the current picture, moving a macroblock (reference block) of the reference picture within a range in which the reference block is referred by the base block (hereinafter, referred to as "motion estimation range"), and finding a position of the reference block which is approximate to the base block.

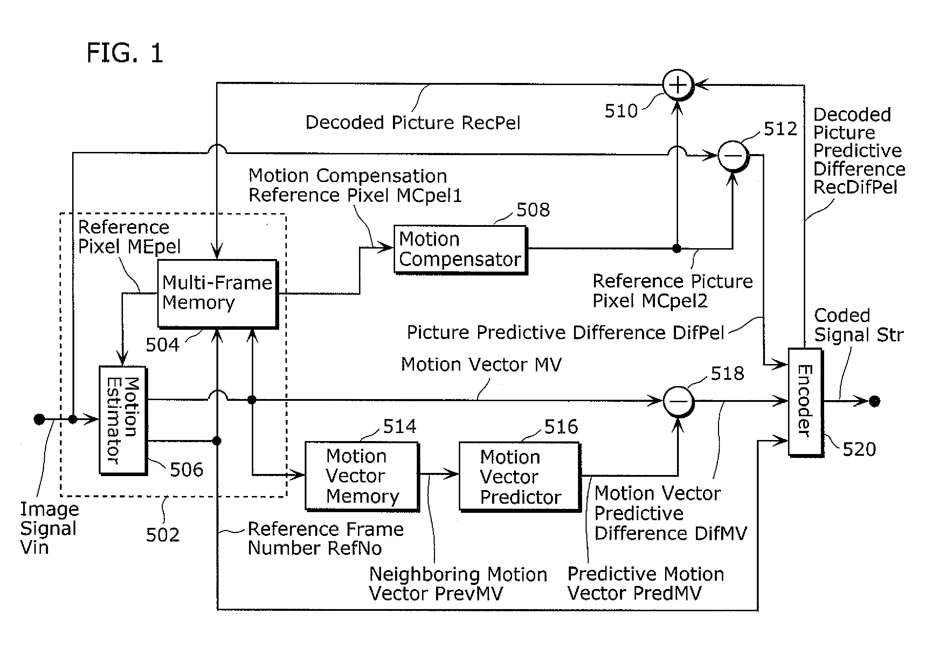

FIG.1 is a block diagram which shows a structure of a conventional video coding device.

This video coding device includes a motion estimator 506, a multi-frame memory 504, a subtractor 512, a subtractor 518, a motion compensatior 508, an encoder 520, an adder 510, a motion vector memory 514, and a motion vector predictor 516.

When performing inter-picture prediction for P-pictures or B-pictures, the motion estimator 506 compares a reference pixel MEpel that is a pixel of a reference picture provided from the multi-frame memory 504 with an image signal Vin of a current picture to be coded, and thereby outputs a motion vector MV and a reference frame number RefNo. The reference frame number RefNo is represented by an identification signal for identifying a reference picture to be selected from among plural reference pictures as a reference picture to be referred to by the current picture. The motion vector MV is temporally stored in the motion vector memory 514, and then outputted as a neighboring motion vector PrevMV. This neighboring motion vector PrevMV is referred to for predicting a predictive motion vector PredMV by the motion vector predictor 516. The subtractor 518 subtracts the predictive motion vector PredMV from the motion vector MV, and outputs the subtraction results as a motion vector predictive difference DifMV.

On the other hand, the multi-frame memory 504 outputs a pixel specified by the reference frame number RefNo and the motion vector MV as a motion compensation reference pixel MCpel1. The motion compensator 508 generates a reference pixel in sub-pixel precision and outputs a reference picture pixel MCpel2. The subtractor 512 subtracts the reference picture pixel MCpel2 from the image signal Vin, and outputs a picture predictive difference DifPel.

The encoder 520 performs variable-length coding on the picture predictive difference DifPel, the motion vector predictive difference DifMV, and the reference frame number RefNo, thereby generating and outputting coded signal Str. It should be noted that, upon coding, a decoded picture predictive difference RecDifPel, which is a result of decoding the picture predictive difference, is simultaneously outputted. The decoded picture predictive difference RecDifPel is obtained by superimposing the coded difference on the picture predictive difference DifPel, and is same as the inter-picture predictive difference which is obtained by which the inter-picture prediction decoding device decodes the coded signal Str.

The adder 510 adds the decoded picture predictive difference RecDifPel to the reference picture pixel MCpel2. The results of the addition are stored in the multi-frame memory 504 as a decoded picture RecPel. However, for an effective use of the capacity of the multi-frame memory 504, an area of the picture stored in the multi-frame memory 504 is released when it is not necessary, and the decoded picture RecPel of a picture which is not necessary to be stored in the multi-frame memory 504 is not stored into the multi-frame memory 504.

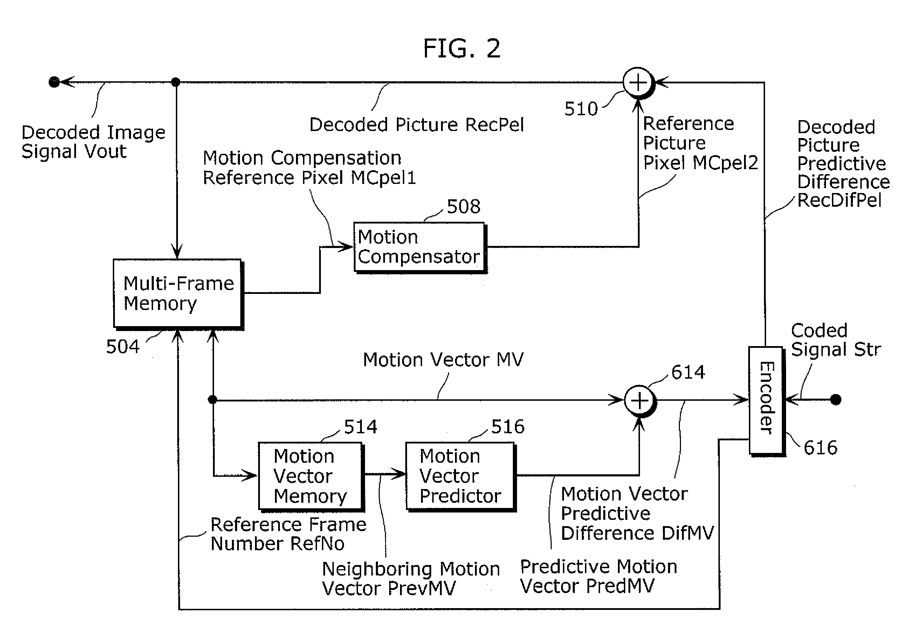

FIG. 2 is a block diagram showing a structure of a conventional video decoding device. It should be noted that the same reference symbols in FIG. 1 are assigned to the identical constituent elements in FIG. 2, so that the details of those elements are the same as described above.

The conventional video decoding device shown in FIG. 2 generates a decoded image signal Vout by decoding the coded signal Str coded by the conventional prediction coding device shown in FIG. 1. The video decoding device includes a multi-frame memory 504, a motion compensator 508, an adder 510, an adder 614, a motion vector memory 514, a motion vector predictor 516, and a decoder 616.

The decoder 616 receives coded signal Str. The decoder 616 decodes the coded signal Str, and thereby outputs the decoded picture predictive difference RecDifPel, the motion vector predictive difference DifMV, and the reference frame number RefNo. The adder 614 adds (i) the predictive motion vector PredMV provided from the motion vector predictor 516 to (ii) the motion vector predictive difference DifMV provided from the decoder 616, and decodes the motion vector MV.

In the inter-picture prediction, the multi-frame memory 504 outputs a pixel indicated by the reference frame number RefNo and the motion vector MV as a motion compensation reference pixel MCpel1. The motion compensator 508 generates a reference pixel with a sub-pixel precision and outputs a reference picture pixel MCpel2. The adder 510 adds the decoded picture predictive difference RecDifPel to the reference picture pixel MCpel2. The results of the addition are stored in the multi-frame memory 504 as a decoded picture RecPel.

However, for an effective use of the capacity of the multi-frame memory 504, an area of the picture stored in the multi-frame memory 504 is released when it is not necessary, and the decoded picture RecPel of a picture which is not necessary to be stored in the multi-frame memory 504 is not stored into the multi-frame memory 504. Accordingly, the decoded image signal Vout, that is the decoded picture RecPel, can be correctly decoded from the coded signal Str.

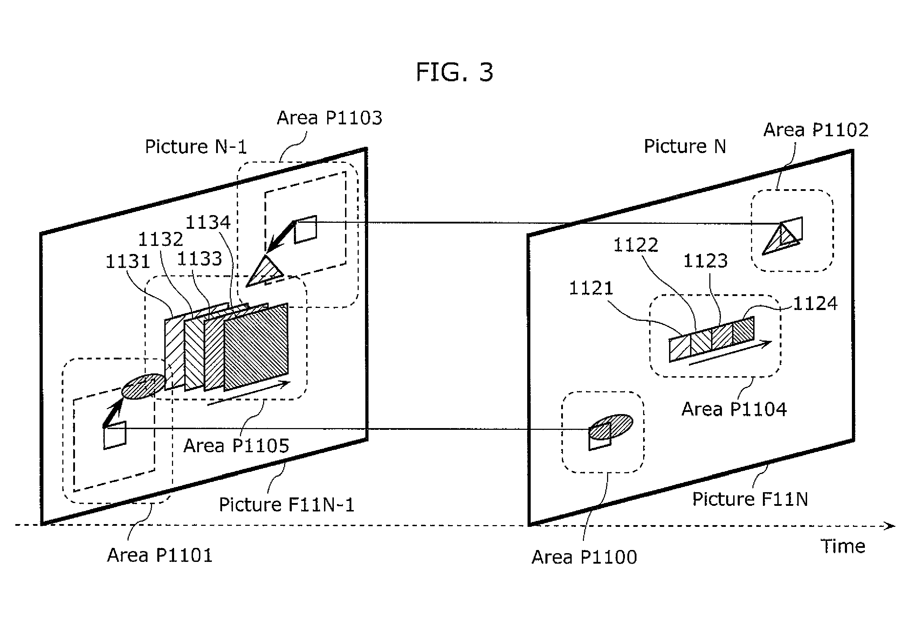

FIG. 3 is a schematic diagram showing motion estimation. The general motion estimation is briefly explained with reference to FIG. 3. In FIG. 3, a picture F11N-1 and a picture F11N are pictures to be coded. The picture F11N-1 is a picture prior to the picture F11N in chronological order. For example, an area P1100 is a part of the picture to be coded. When inter-picture prediction for a macroblock shown as a square in the area P1100 is performed using the picture F11N-1, motion shown by an arrow upward to the right is estimated from an area, which is a motion estimation range, shown by a broken line in an area 1101, and eventually a part of an ellipse is referred to as a reference image. Likewise, an area P1102 is another part of the picture to be coded. When inter-picture prediction for a macroblock shown as a square in the area P1102 is performed using the picture F11N-1, motion shown by an arrow downward to the left is estimated from an area, which is a motion estimation range, shown by a broken line in an area P1103, and eventually a part of a triangle is referred to as a reference image.

An area P1104 shows that each current macroblock to be coded is shifted in an order of a macroblock 1121, a macroblock 1122, a macroblock 1123, and a macroblock 1124. An area P1105 in the picture F11N-1 shows that the motion estimation range is shifted in an order of a motion estimation range 1131, a motion estimation range 1132, a motion estimation range 1133, and a motion estimation range 1134. As explained above, in the general motion estimation, a motion estimation range is updated when a current macroblock is switched to another. Therefore, when a current macroblock is switched to a neighboring macroblock, their motion estimation ranges considerably overlap with each other.

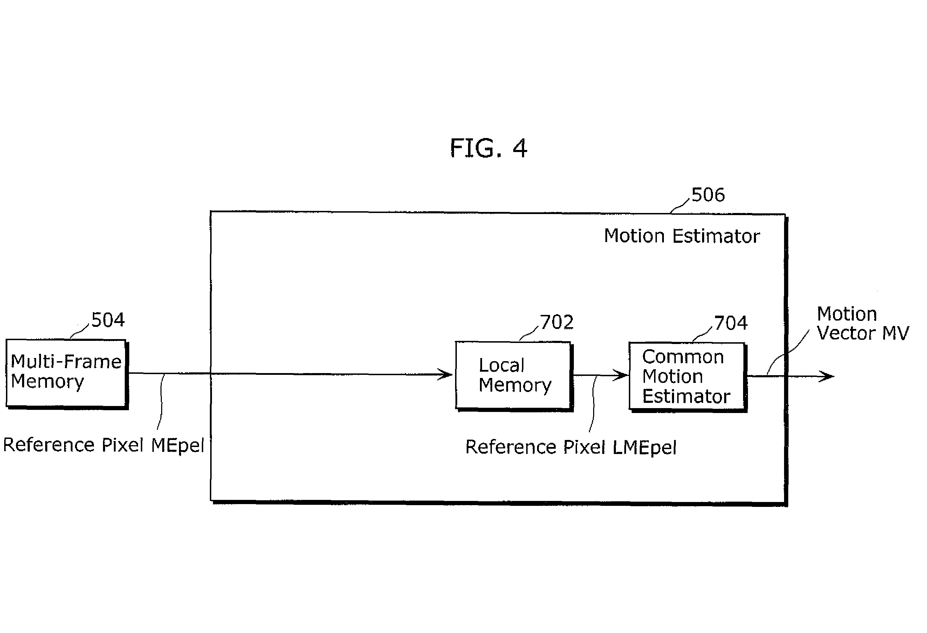

FIG. 4 is a block diagram showing a structure of a conventional motion estimation function. FIG. 4 shows an example of connection between the multi-frame memory 504 and the motion estimator 506 in a range 502 shown by a dotted line in FIG. 1. It should be noted that the same reference symbols in FIG. 1 are assigned to the identical constituent elements in FIG. 4, so that the details of those elements are the same as described above.

The motion estimator 506 includes a local memory 702 and a common motion estimation unit 704.

The local memory 702 reads pixel data included in a motion estimation range from the multi-frame memory 504 and stores the read pixel data. Thereby, in the situation where the motion estimation range is shifted in the area P1105 in FIG. 3, the overlapped part between the motion estimation ranges does not need to be re-transferred, which eventually reduces a data transfer amount of the reference pixel MEpel. Next, the pixel data stored in the local memory 702 is provided as reference pixel LMEpel to the common motion estimation unit 704. The common motion estimation unit 704 performs motion estimation to generate a motion vector MV. When, for example, the multi-frame memory 504 is attached as an external memory, this structure is considerably effective to reduce a bandwidth for transferring pixel data.

Furthermore, if a motion vector is to be estimated from a plurality of motion estimation ranges, a plurality of memories each equivalent to the local memory 702 may be used in the motion estimation, as disclosed in Patent Reference 1.

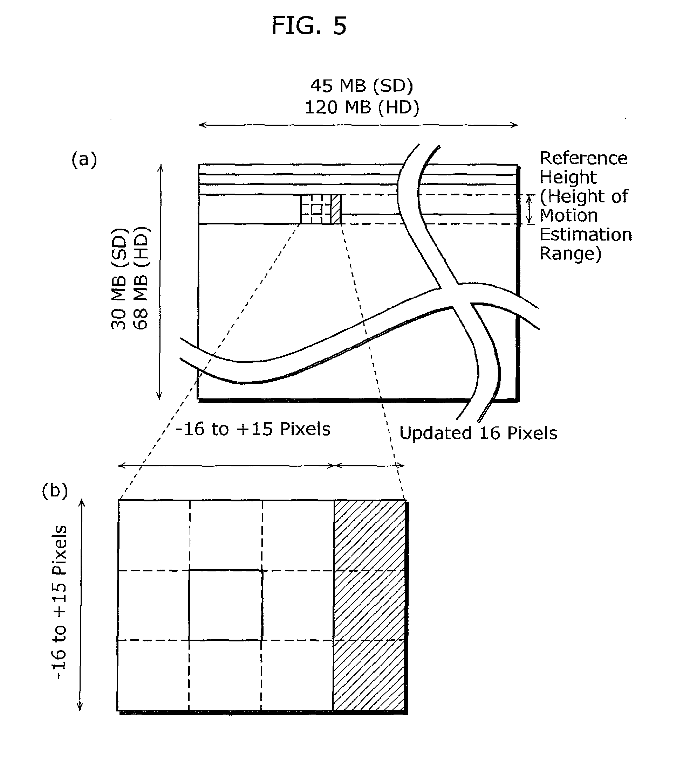

However, even if the local memory 702 is provided as an internal memory in the motion estimator 560, adoption of H.264 standard or an enlarged corresponding field angle causes a problem in a data transfer amount of the reference pixel MEpel. FIG. 5 is a schematic diagram showing memory management for the conventional motion estimation. (a) in FIG. 5 is a diagram showing image data of one picture. (b) in FIG. 5 is an enlarged diagram of a part of (a). The enlarged part shown in (b) in FIG. 5 includes (i) a motion estimation range (shown as white 3 x 3 areas each of which is one macroblock) store in the local memory 702 and (ii) a transfer area (shown as a hatched area) necessary when shifting the motion estimation range. Assuming that motion estimation is performed for each macroblock unit (= 16 x 16 pixels), FIG. 5 shows that motion estimation for macroblocks in one row requires memory transfer of pixels of (vertical length of a motion estimation range) x (horizontal width of one picture), and motion estimation for macroblocks in one picture requires memory transfer of the above-calculated pixels multiplied by the number of macroblocks in a column in one picture. In more detail, if the picture is a Standard Definition (SD) picture in MPEG-2 of 720 x 480 pixels and 45 x 30 macroblocks and a motion estimation range is shifted by one vertically and by one horizontally,

then total (16 + 16 x 2) x 720 x 30 = 1,036,800 pixels

need to be transferred from the multi-frame memory 504 to the local memory 702 for motion estimation for one picture.

However, if a SD picture in H.264 is managed by a reference local memory, more pixels surrounding the position (neighboring pixels) are required than the above conventional MPEG-2 case, since in H.264, a 6-tap filter is used for motion compensation with sub-pixel precision (see Non-Patent Reference 1, for example). The reason is explained in more detail below. In MPEG-2 or the like, a sub-pixel is created using 4 pixels surrounding a position of a sub-pixel-precision pixel. In the case of H.264 using the 6-tap filter, however, a sub-pixel is created using 36 pixels. Therefore, if motion estimation is performed in the same range in both of MPEG-2 and H.264, H.264 requires pixels in two above rows, two below rows, two left columns, two right columns, in addition to pixels used in MPEG-2. As a result, if the picture is a SD picture in H.264 or the like, in which a motion estimation range has macroblocks shifted by one vertically and by one horizontally,

then total (16 + 16 x 2 + 4) x 720 x 30 = 1,123,200 pixels

need to be transferred from the multi-frame memory 504 to the local memory 702 for motion estimation for one picture.

Moreover, if the picture is a High Definition (HD) picture of 1920 x 1088 pixels and 120 x 68 macroblocks, and especially coded in H.264, the above-described pixel transfer amount for one picture is significantly increased, so that such a huge amount is not able to be transferred with a capacity of transferring the reference pixel MEpel shown in FIG. 4.

Examples of such a huge transfer amount are given below. Here, it is assumed that a HD picture of MPEG-2 is managed by the reference local memory. Under the assumption, since a HD picture has pixels about 6 times as many as pixels in a SD picture, a motion estimation range is vertically and horizontally 2.5 times larger than a motion estimation range of a SD picture and thereby the motion estimation range has shifted by 40 pixels vertically and by 40 pixels horizontally.

As a result, total (16 + 40 x 2) x 1,920 x 68 = 12,533,760 pixels

are transferred to the reference local memory for motion estimation for one picture.

Furthermore, if it is assumed that a HD picture of H.264 is managed by the reference local memory,

total (16 + 40 x 2 + 4) x 1,920 x 68 = 13,056,000 pixels

are transferred to the reference local memory for motion estimation for one picture. As a result, the necessary transfer amount is 13 times more than the pixel transfer amount required for a SD picture of MPEG-2.

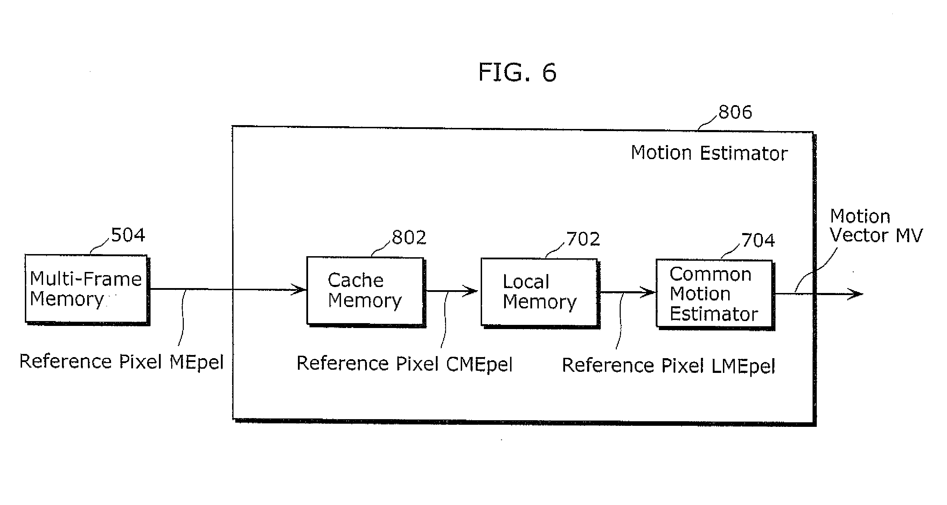

For the above reasons, the motion estimator may further include a cache memory. FIG. 6 is a second block diagram showing a structure of another conventional motion estimation function. It should be noted that the same reference symbols in FIG. 4 are assigned to the identical constituent elements in FIG. 6, so that the details of those elements are the same as described above.

The motion estimator 806 includes a cache memory 802, the local memory 702 and the common motion estimation unit 704. The motion estimator 806 of FIG. 6 differs from the motion estimator 506 of FIG. 4 in further including the cache memory 802 between the multi-frame memory 504 and the local memory 702.

The pixel data stored in the multi-frame memory 504 is transferred as reference pixel MEpel to the cache memory 802 and stored in the cache memory 802. The pixel data is then transferred as reference pixel CMEpel to the local memory 702 and stored in the local memory 702. The common motion estimation unit 704 executes motion estimation using the pixel data to generate a motion vector MV.

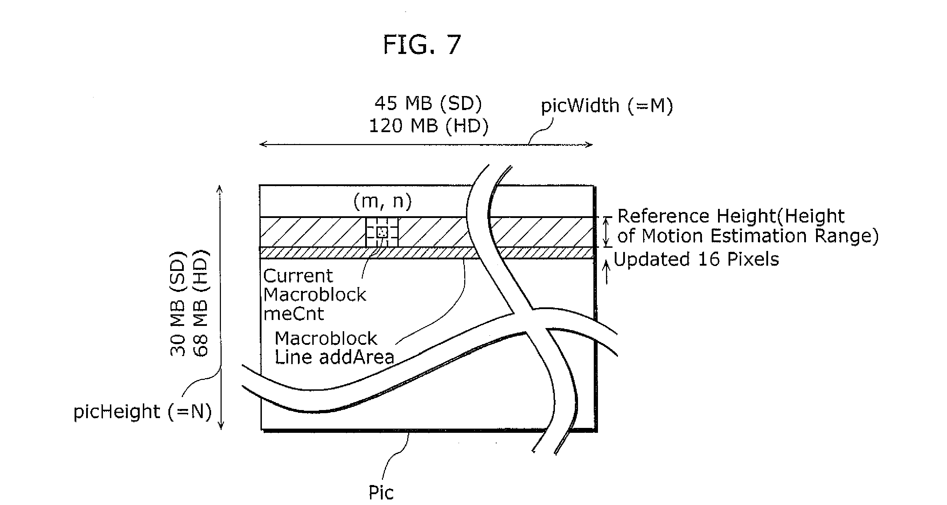

In the above conventional structure, the cache memory 802 stores the pixel data as a line buffer storing data on a macroblock line basis, so that it is not necessary to re-retrieve pixel data in the same macroblock line as shown in FIG. 5. FIG. 7 is a schematic diagram showing memory management for the conventional motion estimation regarding FIG. 6. FIG. 7 simply shows memory management of the cache memory 802. The cache memory 802 stores (i) pixel data included in horizontal lines as a motion estimation range including a current macroblock meCnt that is shown in grey and (ii) pixel data included in a macroblock line addArea that is to be used in motion estimation for a next macroblock. Thereby, when, for example, the multi-frame memory 504 is attached as an external memory, it is not necessary to re-retrieve pixel data in the same macroblock line from a reference picture, which reduces a bandwidth for transferring the pixel data of the reference pixel MEpel. As a result, the above-described structure is considerably effective to reduce the bandwidth.

As described above, it has been conceived that locality of using pixel data is utilized and memories have a hierarchical structure such as the structure including the multi-frame memory 504, the cache memory 802, and the local memory 702, which makes it possible to reduce a cost of internal memories, reduce a bandwidth for transfer between the motion estimation device and an external memory, and deal with frequent local accessing for motion estimation.

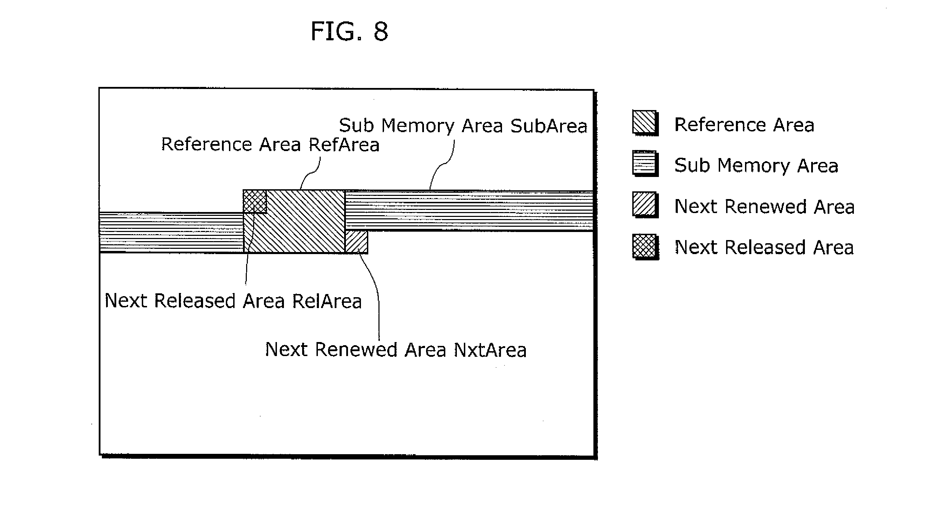

FIG. 8 is a schematic diagram showing a memory management method of managing a pixel data amount stored in the cache memory 802 which is less than that in the memory management method of FIG. 7.

The cache memory 802 of FIG. 7 basically executes memory management for a reference area RefArea and a sub memory area SubArea. The cache memory 802 stores pixel data of a next renewed area NxtArea to a physical memory position in which pixel data of a next released area RelArea is stored. Thereby, it is not necessary to previously store pixel data of the macroblock line addArea. As a result, a memory amount of the internal memories can be reduced.

### (Explanation of Direct Prediction)

The H.264 standard has a mode for inter-picture prediction, which is called "direct prediction" (or, a direct mode, a skip mode, etc.). This mode (direct prediction) is a coding mode at which predictive generation of motion information of a current block is performed using motion information of a coded block. The mode (direct prediction) has advantages of enhancing compression efficiency because the number of bits required in coding motion information is not necessary.

The compression rate enhanced by using the direct prediction depends on an accuracy of predicting motion information of a current block from a coded block. Therefore, there are two kinds of direct prediction which are (i) a "temporal direct mode" using mainly correlation of motion information in a time direction and (ii) a "spatial direct mode" using mainly correlation of motion information in a spatial direction (two-dimensional space in horizontal and vertical directions in a picture).

The temporal direct mode has merits for image having various different motions and a steady speed of the motions, and the spatial direct mode has merits for image having similar motions and a varying speed of motion (see Non-Patent Reference 1, for example).

Meanwhile, if even a difference image between image applied with direct prediction and original image is not necessary, skip prediction by which difference pixel information is not coded either may be applied. However, for the sake of simplified explanation, the above case is considered as one of direct prediction in the following explanation.

### (Inter-Picture Prediction Including Direct Prediction)

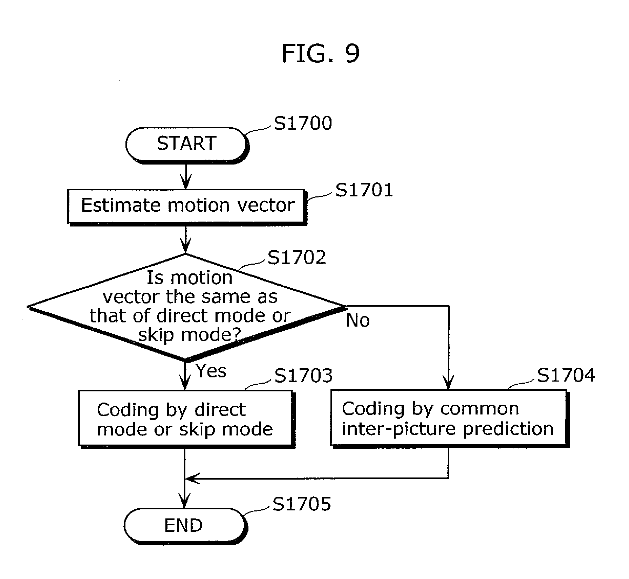

The following describes an example of a flow of coding using direct prediction in the above-described technical background and conventional circuit structures. FIG. 9 is a flowchart of the conventional motion estimation. First, motion estimation is executed using the local memory 702 to generate an optimum motion vector (S1701).

Next, a determination is made as to whether or not the motion vector generated at S1701 is equal or sub-equal to a motion vector calculated by direct prediction (S1702). If the determination is made that the motion vector generated at S1701 is equal or sub-equal to the motion vector calculated by direct prediction, then coding is performed using direct prediction (S1703). On the other hand, if the determination is made that the motion vector generated at S1701 is neither equal nor sub-equal to the motion vector calculated by direct prediction, then coding is performed using general inter-picture prediction utilizing the motion estimation result (S1704).
[Patent Reference 1] Japanese Unexamined Patent Application Publication No. 2006-270683
[Non-Patent Reference 1] ITU-T Recommendation H.264, "SERIES H: AUDIOVISUAL AND MULTIMEDIA SYSTEMS Infrastructure of audiovisual services - Coding of moving video: Advanced video coding for generic audiovisual services", March 2005

### Disclosure of Invention

### Problems that Invention is to Solve

In the meanwhile, when the motion estimator shown in FIG. 4 or FIG. 6 is used to code scenery seen from a train window, video of a television program having fixed subtitles, or the like, direct prediction can be used to considerably enhance coding efficiency. However, the local memory 702 stores only macroblocks to be used as a motion estimation range and does not have pixel data necessary in direct prediction. Therefore, there is a situation of failing direct prediction and thereby reducing coding efficiency.

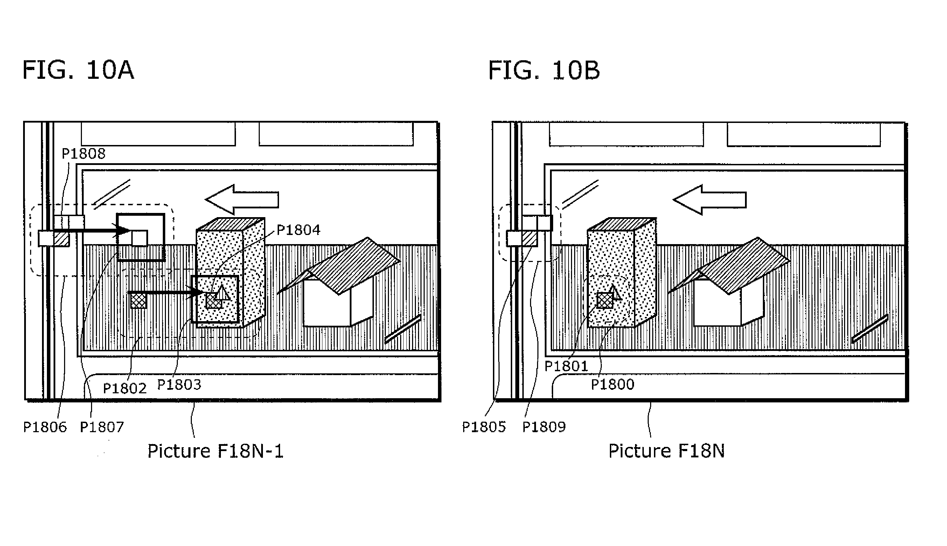

An example of the above situation is described with reference to FIGS. 10A and 10B. FIGS. 10A and 10B are schematic diagrams for explaining processing of estimating motion from image data generated by capturing scenery seen from a train window. In the figures, a picture F18N-1 in FIG. 10A and a picture F18N in FIG. 10B are assumed to be generated by recording outside scenery seen through a window from the inside of a train that performs coding. The picture F18N-1 is a picture prior to the picture F18N in chronological order.

When the train moves to the right, the scenery seen from the train is relatively shifted to the left. Therefore, the outside scenery in the picture F18N is shifted to the left in comparison to the picture F18N. In general, if an overall picture is shifted when inter-picture prediction is to be performed, it is efficient to shift an overall motion estimation range from which motion is to be estimated. Therefore, when, for example, motion estimation of a macroblock P1801 shown as a shaded square in an area P1800 is to be executed from the picture F18N-1, a motion vector is estimated as shown in a range P1802 by determining a pixel position corresponding to the macroblock P1801 from a motion estimation range P1803 with an estimation center being shifted to the right. In the figures, it is predicted that a determination is made that the macroblock P1801 has high correlation with an area P1804.

However, an area P1809 is assumed to be an area including a part of a wall and a handrail in the train. It is therefore considered that, since motion of the overall picture influences a reference image of the picture F18N-1 when a macroblock P1805 shown as a hatched square is to be coded, a position corresponding to the macroblock P1805 is searched from a motion estimation range P1807 to estimate a motion vector. However, the position corresponding to the macroblock P1805 does not exist in the motion estimation range P1807, which fails to generate image having high correlation. Therefore, it is predicted that a reference image is eventually generated using an intra-picture prediction mode not an inter-picture prediction mode.

In such a case, since the area P1809 does not have significant motion between the picture F18N and the picture F18N, it is predicted that coding can be realized effectively when an area P1808 in the case where the motion vector has a value of 0 is selected as a motion estimation range corresponding to the macroblock P1805. For example, it is understood that, assuming that intra-picture prediction is to be performed for the macroblock P1805 using neighboring macroblocks to the left, above, and to the upper right of the macroblock P1805, a motion vector predicted at a spatial direct mode regarding the macroblock P1805 has a value of 0 (see Non-Patent Reference 1 regarding an algorithm of direct prediction) and thereby the selection of direct prediction results in considerably effective macroblock coding. However, in the above-described prior art, since the local memory 702 does not store macroblocks in the area P1808, direct prediction cannot be performed.

Moreover, as disclosed in Patent Reference 1, direct prediction would be possible if a plurality of memories equivalent to the local memory 702 are used for motion estimation. However, as described above, if enlargement of a field angle such as a full HD field angle or motion compensation with a large number of taps such as H.264 standard is necessary, an internal memory provided as the local memory 702 or the cache memory 802 has a huge amount capacity which results in a problem of the increase of a cost of the internal memory (namely, a memory amount of the internal memory).

The present invention is conceived to solve the above problems. An object of the present invention is to provide a motion estimation device that can execute direct prediction while reducing a cost of an internal memory (in other words, a memory amount of an internal memory), in a system that reduces a bandwidth for data transfer from an external frame memory to the motion estimation device by providing in the motion estimation device an internal local memory having a memory capacity corresponding to a motion estimation range.

### Means to Solve the Problems

In accordance with an aspect of the present invention for achieving the object, there is provided a motion estimation device that executes motion estimation for a macroblock in a current picture to be coded, using pixel data of a reference picture held in a multi-frame memory, the motion estimation device comprising: a local memory holding a first pixel data part of the pixel data of the reference picture, the first pixel data part (i) being in a first range from which motion is estimated in first motion estimation and (ii) being read out from the multi-frame memory; a first motion estimation unit configured to execute the first motion estimation using pixel data in the first pixel data part held in the local memory; and a second motion estimation unit configured to execute the second motion estimation using pixel data in the pixel data of the reference picture by an algorithm different from an algorithm of the first motion estimation, the pixel data to be used in the second motion estimation being included in a second range that includes the first range and that is larger than the first range.

With the above structure, pixel data referred to by the first motion estimation unit is held in the local memory. Thereby, it is possible to reduce an average bandwidth for transfer between the motion estimation device and the multi-frame memory. In addition, pixel data outside the first range as well as pixel data in the first range can be used in the second motion estimation. As a result, a coding amount resulting from such second motion estimation is less than a coding amount resulting from second motion estimation using only the pixel data in the first range.

It is preferable that the second motion estimation unit may be configured to execute the second motion estimation using the pixel data in the pixel data of the reference picture held in the multi-frame memory.

With the above structure, pixel data referred to by the first motion estimation unit is held in the local memory. Thereby, it is possible to reduce an average bandwidth for transfer between the motion estimation device and the multi-frame memory. In addition, by using a multi-frame memory having a memory capacity greater than that of the local memory, pixel data outside the first range in addition to pixel data in the first range can be used in the second motion estimation. As a result, a coding amount resulting from such second motion estimation is less than a coding amount resulting from second motion estimation using only the pixel data in the first range.

Accordingly, it is possible to provide a motion estimation device that can execute direct prediction while reducing a cost of an internal memory (in other words, a memory amount of an internal memory), in a system that reduces a bandwidth of data transfer from the external frame memory to the motion estimation device by providing in the motion estimation device the internal local memory having a memory capacity corresponding to a motion estimation range.

It is also preferable that the motion estimation device further includes a selection unit configured to (i) select the first pixel data part held in the local memory when the second motion estimation unit executes the second motion estimation using pixel data included in the first range, and (ii) select the pixel data of the reference picture held in the multi-frame memory when the second motion estimation unit executes the second motion estimation using pixel data that is included in the second range but not included in the first range, wherein the second motion estimation unit is configured to execute the second motion estimation using a result of the selection of the the motion estimation unit.

With the above structure, pixel data referred to by the first motion estimation unit is held in the local memory, and pixel data referred to by the second motion estimation unit is sometimes held in the local memory. Thereby, it is possible to reduce an average bandwidth for transfer between the motion estimation device and the multi-frame memory.

It is further preferable that the motion estimation device further includes an execution control unit configured to control the second motion estimation unit to execute or not to execute the second motion estimation.

With the above structure, processing of the second motion estimation unit for retrieving pixel data from the multi-frame memory can be controlled by the execution control unit. Thereby, it is possible to prevent system failure such as overflow of a bandwidth for transfer between the motion estimation device and the multi-frame memory.

It is still further preferable that the execution control unit is configured to control the second motion estimation unit to execute the second motion estimation, only when at least a part of the pixel data to be used in the second motion estimation is held in the local memory.

With the above structure, the second motion estimation is executed only when it is not necessary to retrieve all of pixel data to be used in the second motion estimation from the multi-frame memory. Thereby, it is possible to reduce a coding amount while reducing an average bandwidth for transfer between the motion estimation device and the multi-frame memory.

It is still further preferable that the motion estimation device further includes a cache memory holding a second pixel data part of the pixel data of the reference picture, the second pixel data part (i) being included in the second range and (ii) being read out from the multi-frame memory, wherein the local memory holds the first pixel data part included in the first range, the first pixel data part being read out from the cache memory, and the second motion estimation unit is configured to execute the second motion estimation using pixel data in the second pixel data part held in the cache memory.

With the above structure, pixel data to be referred to by the first motion estimation unit is retrieved from the cache memory to the local memory to be stored in the local memory, and the second motion estimation unit refers to pixel data stored in the cache memory. Thereby, it is possible to reduce an average bandwidth for transfer between the motion estimation device and the multi-frame memory, and also to execute the second motion estimation even if necessary pixel data is not stored in the local memory. As a result, it is also possible to reduce a coding amount. In addition, the cache memory itself also serves to ensure a bandwidth for transfer for the first motion estimation, which produces advantages that there is no particular cost of an internal memory for the second motion estimation.

It is still further preferable that the motion estimation device further includes a selection unit configured to (i) select the first pixel data part held in the local memory when the second motion estimation unit executes the second motion estimation using pixel data included in the first range, and (ii) select the second pixel data part held in the cache memory when the second motion estimation unit executes the second motion estimation using pixel data that is included in the second range but not included in the first range, wherein the second motion estimation unit is configured to execute the second motion estimation using a result of the selection of the motion estimation unit.

With the above structure, pixel data referred to by the first motion estimation unit is held in the local memory, and pixel data referred to by the second motion estimation unit is sometimes held in the local memory. Thereby, it is possible to reduce an average bandwidth for transfer between the motion estimation device and the multi-frame memory.

It is still further preferable that the motion estimation device further includes a second-motion-estimation possibility determination unit configured to determine that the second motion estimation is possible, only when the pixel data to be used in the second motion estimation is held in the cache memory, wherein the second motion estimation unit is configured to execute the second motion estimation when the second-motion-estimation possibility determination unit determines that the second motion estimation is possible.

With the above structure, when pixel data referred to by the second motion estimation unit is not held in the cache memory, it is not necessary to retrieve the pixel data from the multi-frame memory or to re-store the pixel data to the cache memory. Thereby, it is possible to reduce an average bandwidth for transfer between the motion estimation device and the multi-frame memory.

It is still further preferable that the motion estimation device further includes a second-motion-estimation possibility determination unit configured to determine that the second motion estimation is possible, only when the pixel data to be used in the second motion estimation is included in a predetermined part in an area of the reference picture, the area corresponding to the second pixel data part held in the cache memory.

It is possible that the predetermined part is a part of the area of the reference picture, the part being restricted vertically.

It is also possible that the predetermined part is a part of the area of the reference picture, the part being restricted rightwards.

It is further possible that the predetermined part is a part of the area of the reference picture, the part being restricted leftwards.

It is still further possible that the predetermined part is a part of the area of the reference picture, the part being restricted vertically and horizontally.

With the above structure, a region for which a determination is made as to whether or not pixel data referred to by the second motion estimation exists in the pixel data stored in the cache memory, can be simplified regardless of a shape of image data stored in the cache memory. Thereby, it is possible to simplify the determination performed by the second-motion-estimation possibility determination unit.

It is still further preferable that the cache memory holds only pixel data of macroblocks included in predetermined-numbered macroblock lines from among the pixel data of the reference picture, and that pixel data of macroblocks in a top line and a bottom line of the macroblock lines held in the cache memory is updated every time a current macroblock to be processed in the first motion estimation is updated.

With the above structure, it is possible to prevent that pixel data is transferred from the multi-frame memory necessary for the first motion estimation to the cache memory. As a result, it is also possible to reduce an average bandwidth for transfer between the motion estimation device and the multi-frame memory.

It is still further preferable that the motion estimation device further includes a second-motion-estimation possibility determination unit configured to determine that the second motion estimation is possible, only when the pixel data to be used in the second motion estimation is held in the cache memory, wherein the second-motion-estimation possibility determination unit is configured to determine whether or not the second motion estimation is possible, by excluding the pixel data of the macroblocks which is updated when the current macroblock is updated.

With the above structure, it is possible to determine whether or not the second motion estimation can be executed regardless of a timing of updating the cache memory. Thereby, it is possible to simplify the determination performed by the second-motion-estimation possibility determination unit.

It is still further preferable that the second motion estimation unit is configured to execute the second motion estimation using pixel data only in the second pixel data part held in the cache memory.

With the above structure, it is possible to execute the second motion estimation using pixel data outside the motion estimation range of the first motion estimation, without increasing at all the average bandwidth for transfer of the multi-frame memory or the local memory which has difficulty in ensuring the transfer bandwidth.

It is still further preferable that the second motion estimation does not require calculation of a difference between a predictive motion vector and a motion vector.

With the above structure, coding of a predictive difference between motion vectors is not necessary in coding a result of the second motion estimation of the second motion estimation unit. Thereby, it is possible to shorten an average code length.

It is still further preferable that the second motion estimation is one of direct prediction and skip prediction.

The direct prediction does not need coding of a predictive difference between motion vectors, the step prediction does not need the above coding and also coding of differential pixel data. As a result, it is possible to shorten an average code length.

It is still further preferable that the motion estimation device is implemented as a single chip.

With the above structure, the cache memory and the local memory are formed on a single chip. As a result, it is possible to ensure a transfer bandwidth of these memories.

It should be noted that the present invention is able to be implemented not only as the motion estimation device including the above-described characteristic elements, but also as: a motion estimation method including characteristic steps performed by the characteristic elements of the motion estimation device; a program causing a computer to execute the characteristic steps included in the motion estimation method; and the like. It is obvious that such a program is able to be distributed via a recording medium such as a Compact Disc-Read Only Memory (CD-ROM) or a transmitting medium such as the Internet.

### Effects of the Invention

Accordingly, the present invention provides a motion estimation device that can execute direct prediction while reducing a cost of an internal memory, in a system that reduces a bandwidth for data transfer between the motion estimation device and an external frame memory, by providing in the motion estimation device an internal local memory having a memory capacity corresponding to a motion estimation range.

### Brief Description of Drawings

FIG.1 is a block diagram showing a structure of a conventional video coding device.
FIG. 2 is a block diagram showing a structure of a conventional video decoding device.
FIG. 3 is a schematic diagram showing processing of motion estimation.
FIG. 4 is a block diagram showing a structure of a conventional motion estimation function.
FIG. 5 is a schematic diagram showing memory management for conventional motion estimation regarding FIG. 4.
FIG. 6 is a block diagram showing a structure of another conventional motion estimation function.
FIG. 7 is a schematic diagram showing memory management for conventional motion estimation regarding FIG. 6.
FIG. 8 is a schematic diagram showing memory management for the conventional motion estimation regarding FIG. 6.
FIG. 9 is a flowchart of the conventional motion estimation.
FIG. 10A is a schematic diagram showing processing of estimating motion from scenery seen from a train window.
FIG. 10B is a schematic diagram showing processing of estimating motion from scenery seen from a train window.
FIG. 11 is a block diagram showing a structure of a motion estimation device according to a first embodiment of the present invention.
FIG. 12 is a schematic diagram showing extension of a motion estimation range.
FIG. 13 is a flowchart of motion estimation according to the first embodiment of the present invention.
FIG. 14 is a block diagram showing a structure of a motion estimation device according to a second embodiment of the present invention.
FIG. 15 is a schematic diagram for explaining restriction on the motion estimation range.
FIG. 16A is a schematic diagram showing processing of estimating motion from scenery seen from a train window according to the embodiments of the present invention.
FIG. 16B is a schematic diagram showing processing of estimating motion from scenery seen from a train window according to the embodiments of the present invention.
FIG. 17 is a block diagram of an audio-visual (AV) processing unit realizing an H.264 recorder.
FIG. 18A is an explanatory diagram for implementing any one of the embodiments of the present invention by a computer system.
FIG. 18B is an explanatory diagram for implementing any one of the embodiments of the present invention by the computer system.
FIG. 18C is an explanatory diagram for implementing any one of the embodiments of the present invention by the computer system.

### Numerical References

- 100, 200: motion estimator
- 106: selector
- 108: direct predictor
- 110: access flag storage unit
- 112, 204: direct determinor
- 504: multi-frame memory
- 702: local memory
- 704: common motion estimation unit
- 802: cache memory

### Best Mode for Carrying Out the Invention

### (First Embodiment)

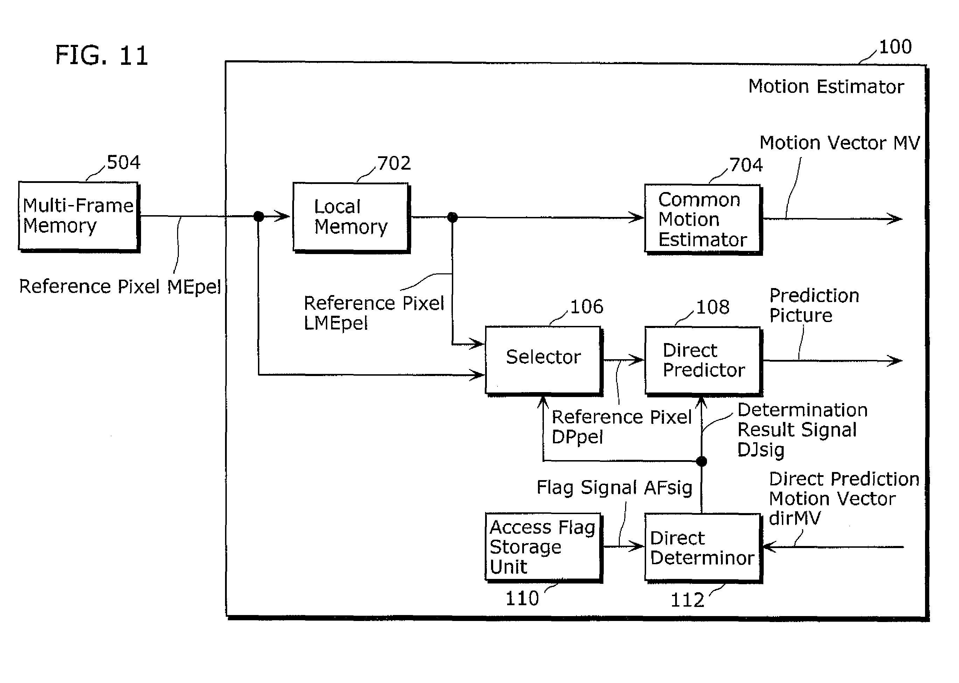

The following describes the first embodiment according to the present invention with reference to FIGS. 11 to 13.

FIG. 11 is a block diagram showing a structure of a motion estimation device according to the first embodiment of the present invention. It should be noted that the reference symbols in FIG. 4 are assigned to identical elements in FIG. 11, so that the details of those elements are same as described above.

The motion estimation device according to the first embodiment includes a multi-frame memory 504 and a motion estimator 100.

The structure of the motion estimator 100 of FIG. 11 differs from the structure of the motion estimator 506 of FIG. 4 in further including a selector 106, a direct predictor 108, an access flag storage unit 110, and a direct determinor 112.

The motion estimator 100 performs the processing described below to execute motion estimation including direct prediction. It should be noted that the common motion estimation unit 704 corresponds to the first motion estimation unit, the direct predictor 108 corresponds to the second motion estimation unit, the selector 106 corresponds to the selection unit, and a set of the access flag storage unit 110 and the direct determinor 112 corresponds to the execution control unit in the aspect of the present invention.

The processing of the common motion estimation is the same as the previously-described processing of the prior art. First, pixel data stored in the multi-frame memory 504 is accumulated as a reference pixel MEpel to the local memory 702. Then, the pixel data stored in the local memory 702 is provided as a reference pixel LMEpel to the common motion estimation unit 704. The common motion estimation unit 704 executes the common motion estimation using the provided reference pixel LMEpel. The local memory 702 holds (a) pixel data of a motion estimation range for a current macroblock and also (b) pixel data of a further range required when the current macroblock is moved. For example, if motion is to be estimated from the motion estimation range as seen in FIG. 5, the local memory 702 needs to hold pixel data of vertical 3 x horizontal 4 macroblocks. Of course, the motion estimation range may be expanded or reduced depending on an area or the like of motion estimation. Next, for the sake of simplified explanation, only the spatial direct mode is described as an example of direct prediction.

In direct prediction, a direct prediction motion vector dirMV is decided using motion vector information of neighboring macroblocks, and then provided to the direct determinor 112. In addition, control information indicating whether or not direct prediction is to be performed is stored as an access flag to the access flag storage unit 110. The access flag is provided as a flag signal AFsig to the direct determinor 112.

Control details indicated by the access flag in the direct determinor 112 depend on how to implement the motion estimator 100. Examples of the control details are presented in the following (1) to (4).

(1) Performing direct prediction only when the local memory 702 holds all of pixel data to be used in the direction prediction, and not performing direct prediction when the local memory 702 does not hold even a part of the pixel data to be used in the direction prediction

(2) Performing direct prediction when the local memory 702 holds at least a part of the pixel data to be used in the direction prediction, and not performing direct prediction when the local memory 702 does not hold the pixel data to be used in the direction prediction

(3) Not performing direct prediction when the pixel data to be used in the direction prediction exists in a picture space far from a range stored in the local memory 702

(4) Not performing direct prediction when a bandwidth allocated for a bus between the multi-frame memory 504 and the local memory 702 is not sufficient for direct prediction

One of purposes of introducing an access flag is preventing increase of the bandwidth of data transfer between the multi-frame memory 504 and the local memory 702. For example, the control method (1) can completely prevent the increase of the bandwidth of data transfer between the multi-frame memory 504 and the local memory 702. However, if only the control method (1) is used, direct prediction is performed only when the motion estimation range includes all of reference pixels. Therefore, the control method (1) is less advantageous than the prior art. The control method (2) or (3) can prevent the increase of the bandwidth of data transfer between the multi-frame memory 504 and the local memory 702, and also perform direct prediction. The control method (4) can perform direct prediction depending on a state of the entire system. It is, of course, possible to combine the control methods (1) to (4). For instance, it is possible that direct prediction is performed when the bandwidth is sufficient, but when the bandwidth is not sufficient, direct prediction is performed only if the local memory 702 has all of data to be used in direct prediction. There is another control method. For instance, direct prediction is performed only when the local memory 702 has more than a half of the data to be used in direct prediction.

Based on the direct prediction motion vector dirMV and the flag signal AFsig, the direct determinor 112 determines whether or not direct prediction is to be performed, and also determines from which memory the pixel data to be used in direct prediction is to be retrieved. The determination results are provided as a determination result signal DJsig to the selector 106 and the direct predictor 108. If the local memory 702 holds the pixel data to be used in direct prediction, then the selector 106 selects the reference pixel LMEpel stored in the local memory 702, according to the determination result signal DJsig. The selector 106 provides the selected reference pixel LMEpel to the direct predictor 108 as a reference pixel DPpel. On the other hand, if the local memory 702 does not hold the pixel data to be used in direct prediction, then the selector 106 selects the reference pixel MEpel stored in the multi-frame memory 504, and provides the selected reference pixel MEpel to the direct predictor 108 as a reference pixel DPpel. The direct predictor 108 executes motion compensation using the provided reference pixel DPpel to generate a prediction image.

Eventually, in the motion estimator 100, a determinor (not shown) compares a coding cost in the case of using the common motion estimation unit 704 to a coding cost in the case of using the direct predictor 108, and the case with a lower coding cost is selected as a result of the mode determination. When the common motion estimation is selected, a motion vector MV is outputted in the same manner as described in the processing of the conventional video coding device of FIG. 1, and a motion vector predictive difference DifMV that is a difference between the motion vector MV and the predictive motion vector PredMV is coded. Here, when direct prediction is selected, it is not necessary to code the motion vector predictive difference DifMV, thereby reducing a coding amount.

The above-described coding can minimize a bandwidth for transfer between the multi-frame memory 504 and the local memory 702, and realize direct prediction for an area that is not held in the local memory 702. As a result, a coding amount can be reduced.

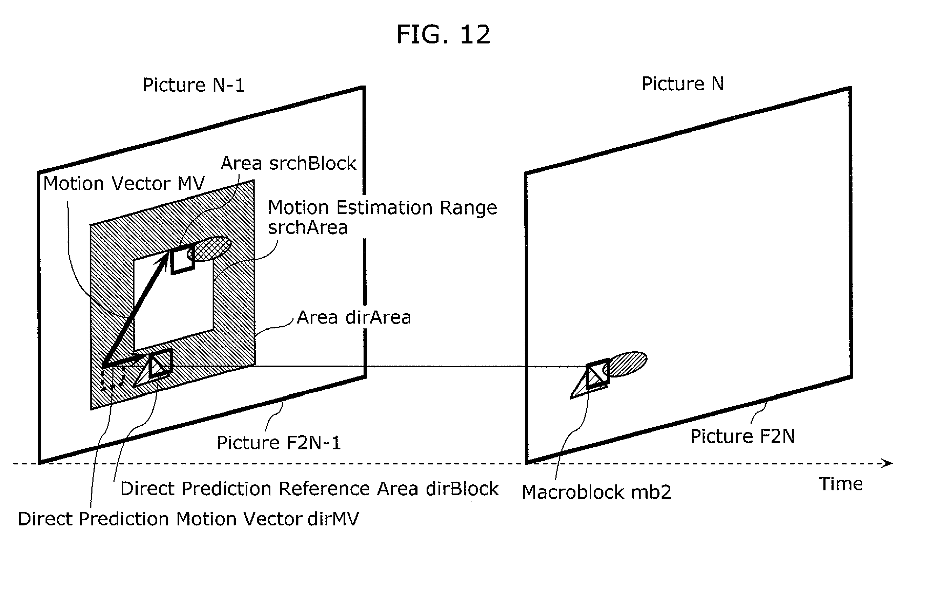

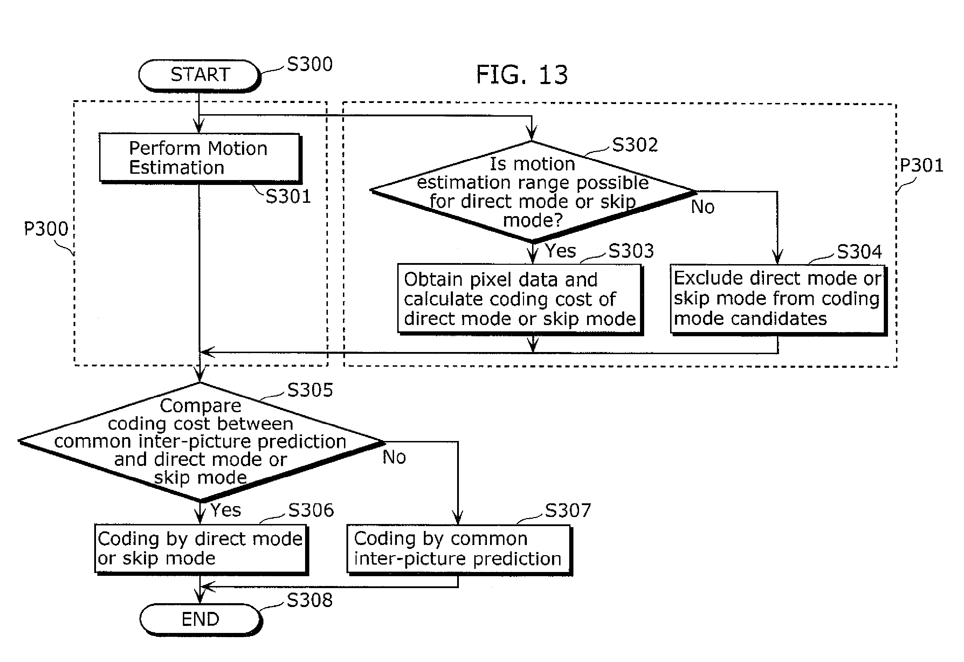

FIG. 12 is a schematic diagram showing extension of a motion estimation range, illustrating the above-described processing. FIG. 13 is a flowchart of motion estimation according to the first embodiment of the present invention. The following describes the processing with reference to FIGS. 12 and 13. In FIG. 21, a picture F2N-1 and a picture F2N are pictures to be coded. The picture F2N-1 is a picture prior to the picture F2N in chronological order.

For example, when a macroblock mb2 in the picture F2N is to be coded, the common motion estimation unit 704 estimates a motion vector using a reference pixel LMEpel in a motion estimation range srchArea stored in the local memory 702, so as to execute common motion estimation with reference to the picture F2N-1. As a result of the estimation, the common motion estimation unit 704 determines that the macroblock mb2 has high correlation with an area srchBlock that includes a part of a shown ellipse, and detects a motion vector MV from the area srchBlock (S301).

On the other hand, in direct prediction, a range dirArea expanded from the range stored in the local memory 702 can be used as a reference image. In the first embodiment of the present invention, as shown in FIG. 12, it is assumed that the above-described control method (3) is used and a motion estimation range to be used in direct prediction is restricted to the expanded range dirArea, although the entire picture F2N-1 can be referred to since the range stored in the multi-frame memory 504 can be also used as a reference image.

Next, the direct determinor 112 determines whether or not the expanded range dirArea includes the direct prediction motion vector dirMV generated in direct prediction (S302). If the determination is made that the expanded range dirArea includes the direct prediction motion vector dirMV generated in direct prediction (Yes at S302), then the selector 106 obtains pixel data of the direct prediction reference area dirBlock from the multi-frame memory 504. In addition, the direct predictor 108 calculates a coding cost of this case (S303).

On the other hand, if the determination is made that the expanded range dirArea does not include the direct prediction motion vector dirMV generated in direct prediction (No at S302), then the direct predictor 108 excludes direct prediction from candidates for a coding mode (S304). Here, a process P300 including S301 and a process P301 including S302 to S304 can be performed in parallel.

When the processes P300 and P301 are completed, a coding cost in the case of using the motion vector MV (common motion estimation) is compared to a coding cost in the case of using direct prediction (S305).

If the coding cost of direct prediction is lower than the coding cost of common motion estimation (Yes at S305), then coding is performed using direction prediction by which the motion vector predictive difference DirMV is not coded (S306). On the other hand, if the coding cost of common motion estimation is lower than the coding cost of direct prediction (No at S305), then coding is performed using common inter-picture prediction by which the motion vector predictive difference DirMV is also coded (S307). However, if direct prediction is excluded from candidates for a coding mode at S304, the determination regarding a coding cost is not made at S305 and coding is performed using common inter-picture prediction at Step 307.

It should be noted that it has been described in the first embodiment that the selector 106 selects from which pixel data is retrieved to be provided to the direct predictor 108. However, in direct prediction, the pixel data may be always retrieved from the multi-frame memory 504. With the above structure, a path of retrieving pixel data can be simplified. In general, the pixel data transfer between the local memory 702 and the common motion estimation unit 704 may use a bus width that is constantly maximum. Therefore, even if pixel data is retrieved from the multi-frame memory 504 in direct prediction, the above structure does not influence a capacity of bus transfer between the local memory 702 and the common motion estimation unit 704.

Here, the motion estimator 100 according to the first embodiment is desirably implemented as a single chip in order to ensure the bus transfer capacity (for example, a capacity of pixel data transfer between the local memory 702 and the common motion estimation unit 704) of the motion estimation device. On the other hand, since the multi-frame memory 504 needs to have a great amount of capacity, it is generally implemented as an additional chip to be attached to the motion estimation device.

### (Second Embodiment)

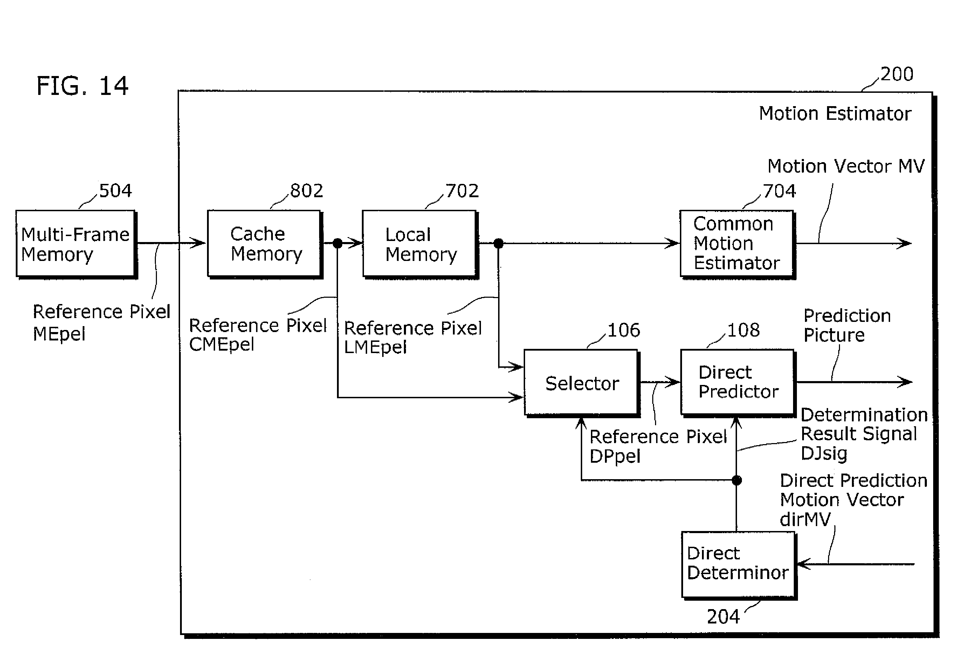

The following describes the second embodiment according to the present invention with reference to FIGS. 14 to 16B.

FIG. 14 is a block diagram showing a structure of a motion estimation device according to the second embodiment of the present invention. It should be noted that the reference symbols in FIG. 11 are assigned to identical elements in FIG. 14, so that the details of those elements are same as described above.

The motion estimation device according to the second embodiment includes the multi-frame memory 504 and a motion estimator 200.

The motion estimator 200 of FIG. 14 differs from the motion estimator 100 of FIG. 11 in further including the cache memory 802 between the multi-frame memory 504 and the local memory 702. In addition, the motion estimator 200 does not have the access flag storage unit 110 included in the motion estimator 100. The storage capacity of the cache memory 802 is greater than that of the local memory 702 and smaller than that of the multi-frame memory 504.

The motion estimator 200 performs processing described below to execute motion estimation including direct prediction. It should be noted that the common motion estimator unit 704 corresponds to the first motion estimation unit, the direct predictor 108 corresponds to the second motion estimation unit, the selector 106 corresponds to the selection unit, and the direct determinor 204 corresponds to the motion estimation possibility determination unit in the aspect of the present invention.

The processing of the common motion estimation is the same as the previously-described processing of the prior art. First, pixel data stored in the multi-frame memory 504 is accumulated as a reference pixel MEpel to the cache memory 802. Then, the pixel data accumulated in the multi-frame memory 504 is then accumulated as a reference pixel CMEpel to the local memory 702. The pixel data stored in the local memory 702 is then provided as a reference pixel LMEpel to the common motion estimation unit 704. The common motion estimation unit 704 executes common motion estimation using the provided reference pixel LMEpel. The local memory 702 holds (a) pixel data of a motion estimation range for a current macroblock and also (b) pixel data of a further range required when the current macroblock is moved. For example, if motion is to be estimated from the motion estimation range as seen in FIG. 5, the local memory 702 needs to hold pixel data of vertical 3 x horizontal 4 macroblocks. Of course, the accumulated motion estimation range may be expanded or reduced depending on an area or the like of motion estimation. Next, the case of using direct prediction is described. Likewise the first embodiment, only the spatial direct mode is described as an example of direct prediction for the sake of simplified explanation.

In direct prediction, a direct prediction motion vector dirMV is decided using motion vector information of neighboring macroblocks, and then provided to the direct determinor 204.

Based on the direct prediction motion vector dirMV, the direct determinor 204 determines whether or not direct prediction is to be performed, and also determines from which memory the pixel data to be used in direct prediction is to be retrieved. The determination results are provided as a determination result signal DJsig to the selector 106 and the direct predictor 108. If the local memory 702 holds the pixel data to be used in direct prediction, then the selector 106 selects the reference pixel LMEpel stored in the local memory 702, according to the determination result signal DJsig. The selector 106 provides the selected reference pixel LMEpel to the direct predictor 108 as a reference pixel DPpel. On the other hand, if the pixel data to be used in direct prediction is not held in the local memory 702 but is held in the cache memory 802, then the selector 106 selects the reference pixel CMEpel stored in the cache memory 802, and provides the selected reference pixel CMEpel to the direct predictor 108 as a reference pixel DPpel. The direct predictor 108 executes motion compensation using the provided reference pixel DPpel to generate a prediction image.

Eventually, in the motion estimator 200, a determinor (not shown) compares a coding cost in the case of using the common motion estimation unit 704 to a coding cost in the case of using the direct predictor 108, and the case with a lower coding cost is selected as a result of the mode determination. When the common motion estimation is selected, a motion vector MV is outputted in the same manner as described in the processing of the conventional video coding device of FIG. 1, and a motion vector predictive difference DifMV that is a difference between the motion vector MV and the predictive motion vector PredMV is coded. Here, when direct prediction is selected, it is not necessary to code the motion vector predictive difference DifMV, thereby reducing a coding amount.

One of the characteristics of the second embodiment is that pixel data to be used in direct prediction is retrieved not from the multi-frame memory 504 but from only the cache memory 802. Since the multi-frame memory 504 is generally attached as an external memory to the motion estimation device, retrieving from the multi-frame memory 504 has difficulty in ensuring a bandwidth for transferring pixel data. However, the structure of the second embodiment has advantages of completely preventing a bandwidth for transfer between the motion estimation device and the external memory and realizing direct prediction using an image area outside a motion estimation range. Here, the structure of the second embodiment can be combined with the structure of the first embodiment to perform direct prediction using the multi-frame memory 504, thereby producing the effects as the same as those of the first embodiment.

Furthermore, the cache memory itself is used to ensure a bandwidth for transfer in common motion estimation, the structure of the second embodiment can prevent a cost of having an additional internal memory to perform direct prediction.

The above-described coding can expand a motion estimation range for direct prediction without increasing a transfer amount regarding the multi-frame memory 504. In addition, the above-described coding can minimize a bandwidth for transfer between the cache memory 802 and the local memory 702, and also realize direct prediction for an area that is not held in the local memory 702. As a result, an amount of the coding can be reduced.

It should be noted that it has been described in the second embodiment that the selector 106 selects a source from which pixel data is retrieved to be provided to the direct predictor 108. However, in direct prediction, pixel data may be always retrieved from the cache memory 802. In short, the structure according to the second embodiment does not have a path from the local memory 702 to the selector 106. Such a structure can simplify a path for retrieving data. In general, a bus width that is constantly maximum is used to transfer pixel data between the local memory 702 and the common motion estimation unit 704. Therefore, the above structure does not influence performance of the bus transfer between the local memory 702 and the common motion estimation unit 704.

Here, the motion estimator 200 according to the second embodiment is desirably implemented as a single chip in order to ensure the bus transfer performance (for example, transfer of pixel data between the local memory 702 and the common motion estimation unit 704) of the motion estimation device. On the other hand, since the multi-frame memory 504 needs to have a great amount of capacity, it is generally implemented as an additional chip to be attached to the motion estimation device.

It should also be noted that it has been expressly described in the second embodiment that the cache memory 802 is provided between the multi-frame memory 504 and the local memory 702, but the local memory 702 may store pixel data in an area corresponding to a line buffer accumulated in the cache memory 802. However, if an image range of the pixel data stored in the local memory 702 is set to be a motion estimation range in the above situation, a bandwidth for transfer between the common motion estimation unit 704 and the local memory 702 is extremely increased. Therefore, it is also possible that the common motion estimation unit 704 executes motion estimation using only the above-described specific motion estimation range from among pixel data stored in the local memory 702 (for example, in FIG. 5, the specific motion estimation range corresponding to vertical 3 x horizontal 3 macroblocks), and that the direct predictor 108 performs direct prediction using all areas in a line buffer stored in the local memory 702. In this case, although a bandwidth for an output of the local memory 702 is increased, it is possible to reduce an entire memory amount and enhance efficiency of direct prediction without increasing a bandwidth of an external memory. As described below, if a motion estimation range for direct prediction is restricted, the control of the direct determinor 204 becomes easy in the above structure.

### (Addition of Restriction on Expanded Motion Estimation Range)

In the structure according to the second embodiment, the cache memory 802 is used to reduce at maximum an amount of pixel data transferred between the motion estimation device and the multi-frame memory 504, and also expand a motion estimation range for direct prediction (hereinafter, the expanded motion estimation range is referred to also as a "direct prediction possible range"). Here, by restricting an expanded range of a motion estimation range for direct prediction, the control of the direct determinor 204 becomes easier, which is more advantageous in implementation. The following describes the restriction on an expanded range of a motion estimation range for direct prediction (namely, an expanded range in a direct prediction possible range).

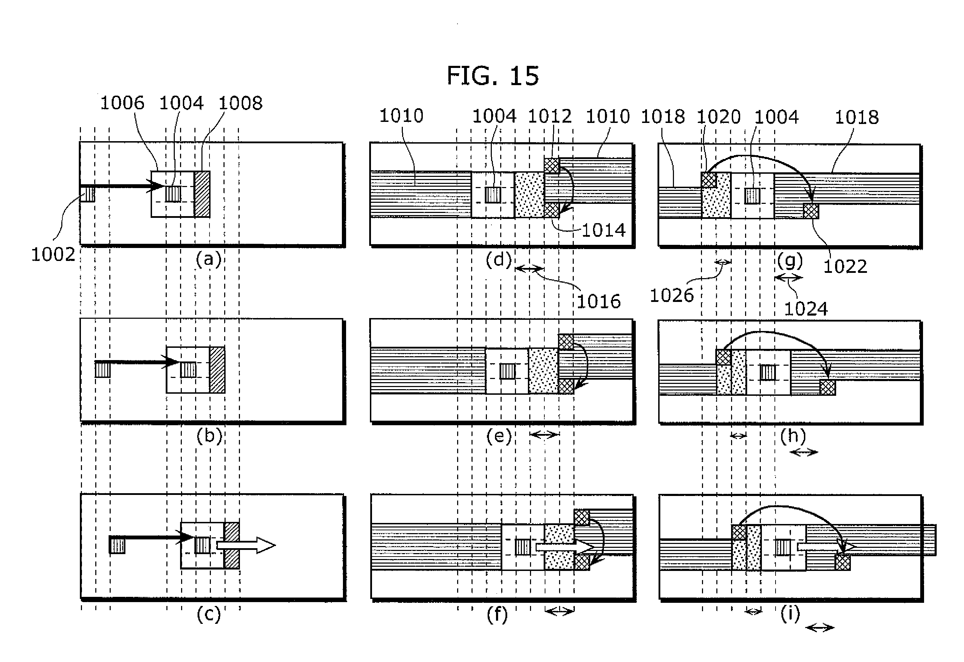

FIG. 15 is a schematic diagram for explaining restriction on an expanded range of a motion estimation range. (a) to (c) of FIG. 15A shows how to control pixels in the local memory 702 on a macroblock-to-macroblock basis in chronological order. In (a) of FIG. 15, an area 1006 (3 macroblocks x 3 macroblocks) is set to be a motion estimation range. The area 1006 has a macroblock 1004 as a center for motion estimation. The macroblock 1004 is determined by shifting a leftmost macroblock 1002 to the right (namely, rightwards). (a) of FIG. 15 also shows that an area 1008 consisting of further 3 macrobocks (shown as a hatched area) is previously obtained to perform processing for a next macroblock (see (b) of FIG. 15). The state of the memory management is shifted from the state shown in (a) of FIG. 15 to the state shown in (b) of FIG. 15 then to the state shown in (c) of FIG. 15.

(d) to (f) of FIG. 15 show how to manage a motion estimation range in the local memory 702 on a macroblock-to-macroblock basis, in the similar manner to the case of (a) to (c) of FIG. 15. (d) to (f) of FIG. 15 also shows how to manage the cache memory 802 holding areas 1010 (hatched by horizontal lines) and the like. These figures show the situation where the cache memory 802 has a memory capacity of, for example, (a picture width x 3 macroblock lines). As shown in (d) to (e) of FIG. 15, as the macroblock 1004 as the center for motion estimation is shifted to the right, namely from (d) to (e) then to (f) of FIG. 15, image data of a logical area 1014 seen as a cross-hatched area in the bottom line is sequentially stored to a physical memory area where a logical area 1012 seen as a cross-hatched area in a top line is stored, thereby updating the memory state.

If, in the memory management shown in (d) to (f) of FIG. 15, all of the data stored in the cache memory 802 is set to be a direct prediction possible range, direct prediction is difficult depending on a timing of updating the memory state for the logical areas 1012 and 1014. Moreover, since the area stored in the cache memory 802 is not a rectangular, the processing performed by the direct determinor 204 to determine an area (range) becomes complicated.

In order to solve the above problems, an expanded range, which is a range expanded to the right to expand a motion estimation range for direct prediction, is restricted up to predetermined macroblock line(s) from the motion estimation range stored in the local memory 702. Thereby, in the processing of determining whether the expanded range can be obtained, it is not necessary to consider a timing of updating pixel data and a horizontal position of the motion estimation range for direct prediction. Therefore, it is possible to simplify the processing of the direct determinor 204. For example, if an expanded range, which is expanded to the right, is restricted up to two macroblock lines 1016 from the motion estimation range in (d) to (f) of FIG. 15, it is not necessary to consider a timing of updating the memory state. Of course, the limit of the restriction can be appropriately changed depending on a memory capacity of the cache memory 802 or an algorithm for the updating.

Furthermore, (g) to (i) of FIG. 15 show how to mange a motion estimation range in the local memory 702 on a macroblock-to-macroblock basis, in the similar manner to the case of (a) to (c) of FIG. 15. (g) to (i) of FIG. 15 also shows that the state managed in the cache memory 802 holding an area 1018 shaded by horizontal lines. (g) to (i) of FIG. 15 differ from (d) to (f) of FIG. 15 in that a capacity of the cache memory 802 is reduced by using the memory management explained with reference to FIG. 8. These figures show the situation where the cache memory 802 has a memory capacity of, for example, (a picture width x 3 macroblock lines -α). As shown in (g) to (i) of FIG. 15, as the macroblock 1004 as the center for motion estimation is shifted to the right, namely from (g) to (h) then to (i) of FIG. 15, image data of a logical area 1022 seen as a cross-hatched area in a bottom line is sequentially stored to a physical memory area where a logical area 1020 seen as a cross-hatched area in a top line is stored, thereby updating the memory state.

If all of the data stored in the cache memory 802 is set to be a direct prediction possible range assuming that the management shown in (g) to (i) of FIG. 15 is performed, the determination performed by the direct determinor 204 is difficult also for an expanded range expanding to the left (namely, leftwards) from the motion estimation range, depending on the previously-explained timing of updating the memory state by updating the logical areas 1020 and 1022 shown as the cross-hatched areas. Moreover, since the area stored in the cache memory 802 is not a rectangular, the processing performed by the direct determinor 204 to determine an area (range) becomes complicated.

In order to solve the above problems, an expanded range, which is a range expanded to the left to expand a motion estimation range for direct prediction, is restricted up to predetermined macroblock line(s) from the motion estimation range stored in the local memory 702. Thereby, in the processing of determining whether the expanded range can be obtained, it is not necessary to consider a timing of updating pixel data and a horizontal position of the motion estimation range for direct prediction. Therefore, it is possible to simplify the implementation of the direct determinor 204. For example, if an expanded range is restricted up to two macroblock lines 1024 to expand the motion estimation range to the right, and one macroblock line 1026 to expand the motion estimation range to the left in (d) to (f) of FIG. 15, it is not necessary to consider a timing of updating the memory state. Of course, the limit of the restriction can be appropriately changed depending on a memory capacity of the cache memory 802 or an algorithm for the updating.

It is also possible to restrict an expanded range of a motion estimation range for direct prediction in a vertical direction. For example, in the management shown in (d) to (f) of FIG. 15, two macroblock lines at the center are not updated although macroblocks in a top line and a bottom line in the area stored in the cache memory 802 are updated as the current macroblock is shifted. Therefore, by restricting the expanded range for direct prediction up to macroblocks in two macroblock lines at the center, the direct determinor 204 can easily determine whether or not direct prediction is to be performed. Of course, the limit of the restriction can be appropriately changed depending on a memory capacity of the cache memory 802 or an algorithm for the updating. It should also be noted that the restriction on an expanded range is not only vertical or only horizontal. Depending on a memory capacity of the cache memory 802 or an algorithm for the updating, it is possible to restrict an expanded range vertically and horizontally to further simplify the determination processing performed by the direct determinor 204.

### (Application of Embodiments to Image of Scenery Seen from Train Window)

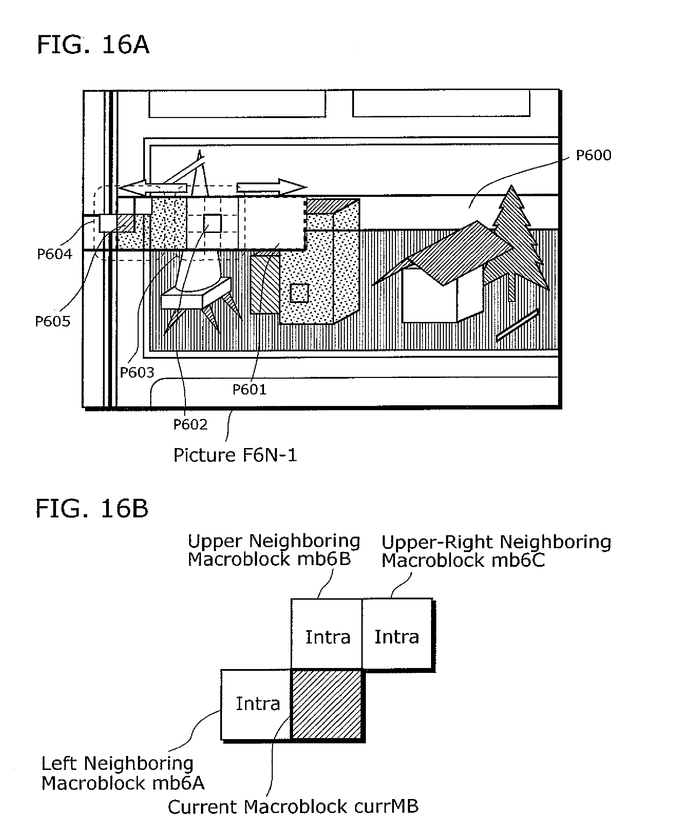

Each of FIGS. 16A and 16B is a schematic diagram showing processing of estimating motion from scenery seen from a train window according to the embodiments of the present invention. In FIG. 16A, a picture F6N-1 is a reference picture identical to the picture F18N-1 in FIG. 10A. An area P600 is managed in the cache memory 802. An area P601 is an expanded range of a motion estimation range for direct prediction, which is restricted by the direct determinor 204. FIG. 16A also shows: a macroblock P602 as the center for motion estimation; a motion estimation range P603 from which motion is estimated; a neighboring area P604 co-located with the current macroblock P1805 in the picture F18N in FIG. 10B; a position P605 selected by the direct prediction. Here, it is assumed in the same manner as FIGS. 10A and 10B that the center for motion estimation is shifted to the right.

FIG. 16B shows, in the picture F18N, a current macroblock currMB (macroblock 1805), and neighboring macroblocks consisting of a left neighboring macroblock mb6A, an upper neighboring macroblock mb6B, and an upper-right neighboring macroblock mb6C. For the sake of simplicity in the description, it is assumed that, since the center for motion estimation is shifted in accordance with a motion of the entire picture, reference images of the neighboring macroblocks consisting of the left neighboring macroblock mb6A, the upper neighboring macroblock mb6B, and the upper-right neighboring macroblock mb6C are not obtained from the picture F6N-1, so that intra-picture prediction is performed on the neighboring macroblocks.

Under the above assumption, when the current macroblock currMB is to be processed, all of coding modes for the neighboring macroblocks are set as intra-picture prediction. Therefore, a value of a motion vector at a spatial direct mode is 0. Here, assuming that the motion estimation range P603 from which motion is estimated is shifted to the right as the motion estimation range for the neighboring macroblocks is shifted, a reference image resulting in increasing a coding cost is selected from the motion estimation range P603.

Here, a value of a motion vector generated for direct prediction is 0, and the direct determinor 204 determines whether or not the position P605 selected by the direct prediction is included in the area P601 with a restricted expanded range. As a result, if the determination is made that the position P605 is included in the area P601, then coding is performed using direct prediction. Thereby, the coding using direct prediction has a coding bit amount significantly less than that of coding using intra-picture prediction.

It should be noted that functional blocks in the block diagrams (FIGS. 11, 12 and the like) are typically implemented into a Large-Scale Integration (LSI) which is an integrated circuit. These may be integrated separately, or a part or all of them may be integrated into a single chip. Since the multi-frame memory 504 has a large amount of capacity, it may be implemented as an external large-capacity Synchronous Dynamic Random Access Memory (SDRAM) attached to the LSI, or may be implemented into a single package or a single chip.

Here, the integrated circuit is referred to as a LSI, but the integrated circuit can be called an IC, a system LSI, a super LSI or an ultra LSI depending on their degrees of integration. It should also be noted that the technique of integrated circuit is not limited to the LSI, and it may be implemented as a dedicated circuit or a general-purpose processor. It is also possible to use a Field Programmable Gate Array (FPGA) that can be programmed after manufacturing the LSI, or a reconfigurable processor in which connection and setting of circuit cells inside the LSI can be reconfigured. Furthermore, if due to the progress of semiconductor technologies or their derivations, new technologies for integrated circuits appear to be replaced with the LSIs, it is, of course, possible to use such technologies to implement the functional blocks as an integrated circuit. For example, biotechnology and the like can be applied to the above implementation.

### (Application 1)

The following describes an example of an application of the video coding device including the above-described motion estimation device according to the embodiments of the present invention.

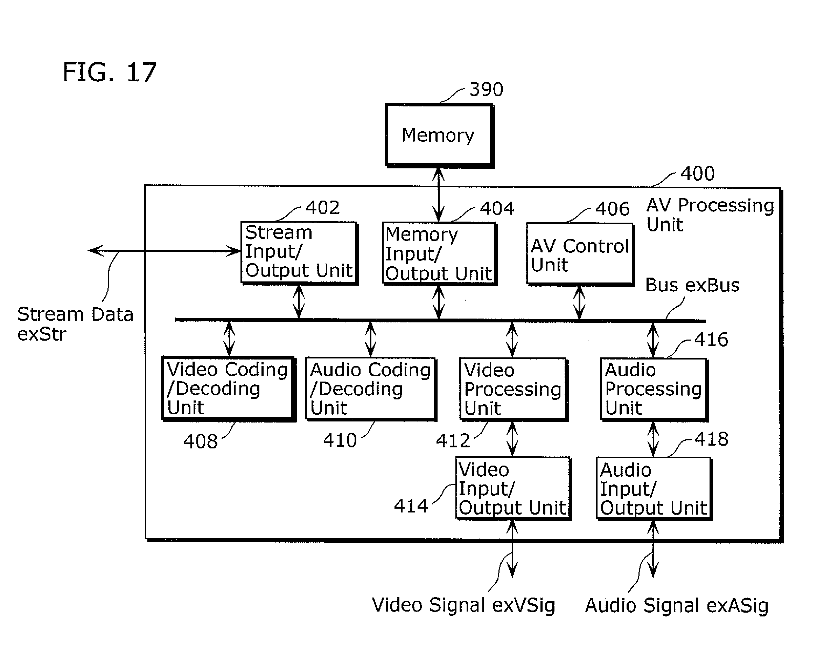

FIG. 17 is a block diagram of an AV processing unit realizing an H.264 recorder. An AV processing unit 400 is a processing unit implemented as a DVD recorder, a hard disk recorder, and the like which reproduces digitally-compressed audio and video.

The AV processing unit 400 includes a stream input/output unit 402, a memory input/output unit 404, an AV control unit 406, a video coding/decoding unit 408, an audio coding/decoding unit 410, a video processing unit 412, a video input/output unit 414, an audio processing unit 416, and an audio input/output unit 418.

The stream input/output unit 402 is connected to a bus exBus and a large-capacity accumulation device (not shown) in order to input and output audio and video stream data exStr. The bus exBus transfers the stream data, audio/video decoded data, and the like.

The video coding/decoding unit 408 is connected to the bus exBus and performs coding and decoding of video.

Outside the AV processing unit 400, there is provided a memory 390 which stores data such as the stream data, coded data, decoded data, and the like. The memory 390 is connected to the bus exBus via the memory input/output unit 404.

Here, the video coding/decoding unit 408 includes the motion estimation device shown in FIG. 11 or 14. The stream data exStr includes a coded signal Str. The memory 390 includes the multi-frame memory 504 seen in FIG. 11.

The video processing unit 412 is connected to the bus exBus and performs pre-processing and post-processing on video signals. The video input/output unit 414 outputs, to the outside, as the video signals exVSig, video data signals which have been processed by the video processing unit 412 or which have passed through the video processing unit 412 without any processing. The video input/output unit 414 also retrieves the video signals exVSig from the outside.

The audio processing unit 416 is connected to the bus exBus, and performs pre-processing and post-processing on audio signals exASig. The audio input/output unit 418 outputs, to the outside, as the audio signals exASig, audio data signal which have been processed by the audio processing unit 416 or which have passed through the audio processing unit 416 without any processing. The audio input/output unit 418 also retrieves the audio signals exASig from the outside. In addition, the AV control unit 406 controls the entire AV processing unit 400.

In coding processing, firstly, the video signals exVSig are inputted to the video input/output unit 414 and the audio signals exASig are inputted to the audio input/output unit 418.

In recording processing, firstly, from the video signals exVSig inputted to the video input/output unit 414, the video processing unit 412 extracts characteristics to be used in filtering processing or coding processing. After extracting the characteristics, the video signals exVSig are stored as an original image data to the memory 390 via the memory input/output unit 404. Next, the original image data and reference image data are transferred from the memory 390 to the video coding/decoding unit 408 via the memory input/output unit 404. In reverse, the video stream data and locally-reconstructed data processed by the video coding/decoding unit 408 are transferred from the video coding/decoding unit 408 to the memory 390.

On the other hand, from the audio signals exASig inputted to the audio input/output unit 418, the audio processing unit 416 extracts characteristics to be used in filtering processing or coding processing. After extracting the characteristics, the audio signals exASig are stored as original audio data to the memory 390 via the memory input/output unit 404. Next, the original audio data is retrieved from the memory 390 via the memory input/output unit 404 and then coded. The coded audio data is stored again to the memory 390 as audio stream data.

Finally, in the coding processing, the video stream, the audio stream, and other stream data are processed as one stream data, and outputted as stream data exStr via the stream input/output unit 402. Such stream data exStr is then written onto a large-capacity accumulation device such as an optical disk (DVD) or a hard disk (HDD).

The following describes decoding processing in detail. Firstly, the data accumulated in the recording processing is read out from the large-capacity accumulation device such as an optical disk, a hard disk, or a semiconductor memory. Thereby, audio and video stream signals are retrieved as the stream data exStr via the stream input/output unit 402. The video stream included in the stream data exStr is provided to the video coding/decoding unit 408, and the audio stream included in the stream data exStr is provided to the audio coding/decoding unit 410.

The video data decoded by the video coding/decoding unit 408 is stored to the memory 390 via the memory input/output unit 404. The video processing unit 412 performs processing treatment such as noise cancellation on the data stored in the memory 390. Furthermore, the video data stored in the memory 390 is sometimes used again by the video coding/decoding unit 408 as a reference picture in inter-picture motion compensation prediction.

On the other hand, the audio data decoded by the audio coding/decoding unit 410 is stored to the memory 390 via the memory input/output unit 404. The audio processing unit 416 performs processing treatment such as acoustic treatment on the data stored in the memory 390.

Synchronizing video with audio, the data processed by the video processing unit 412 is outputted as video signals exVSig via the video input/output unit 414 to be displayed on a television screen or the like. The data processed by the audio processing unit 416 is outputted as audio signals exASig via the audio input/output unit 418 and eventually outputted from a loudspeaker or the like.

### (Application 2)

Moreover, the processing described in each of the above embodiments can be easily performed in an independent computer system, when a program, which realizes the video decoding device according to each of the above embodiments, onto a recording medium such as a flexible disk.

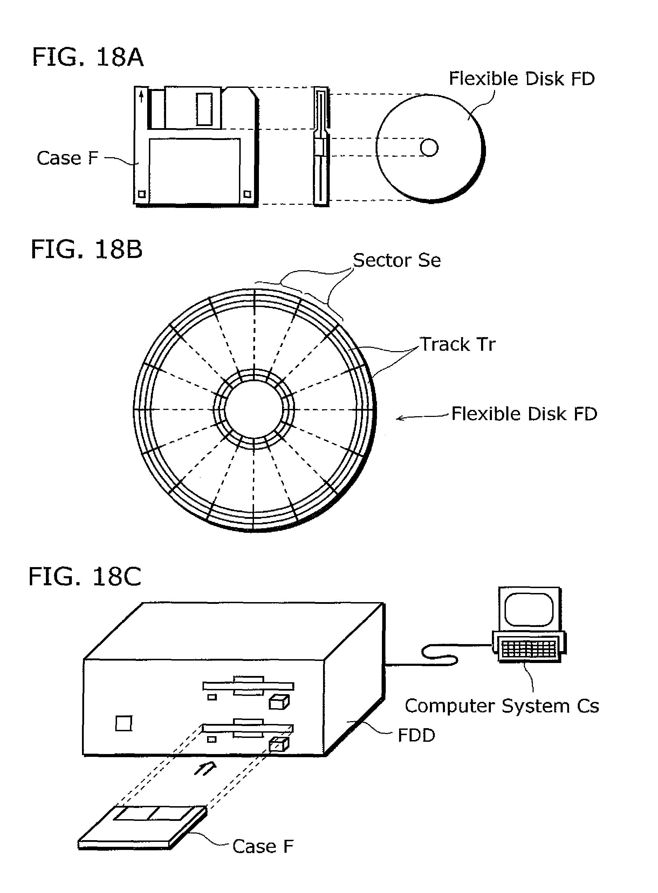

FIGS. 18A to 18C are explanatory diagrams of a case where the processing is perform in a computer system, using a flexible disk which holds the program for realizing the video decoding device according to each of the first and second embodiments.

FIG. 18A shows a front view and a cross-sectional view of a case of the flexible disk, and a view of the flexible disk itself. FIG. 18B shows an example of a physical format of the flexible disk, as a recording medium body. The flexible disk FD is contained in the case F, and on a surface of the disk, a plurality of tracks Tr are formed concentrically from the outer periphery to the inner periphery, and each track is segmented into sixteen sectors Se in an angular direction. Therefore, in the flexible disk storing the above program, the video decoding device as the program is recorded in an area allocated on the above flexible disk FD.

Moreover, FIG. 18C shows a structure for recording and reproducing the above program on the flexible disk FD. When the program is recorded onto the flexible disk FD, the video decoding device as the program is written from a computer system Cs via a flexible disk drive. When the above video decoding device is constructed in the computer system using the program in the flexible disk, the program is read out from the flexible disk via the flexible disk drive and transferred to the computer system.

It should be noted that it has been described that the recording medium is a flexible disk, but the recording medium may be an optical disk. Of course, the recording medium is not limited to the above mediums, but any other mediums, such as an Integrated Circuit (IC) card and a Read-Only Memory (ROM) cassette, can be also used, as far as the mediums can record the program.

The motion estimation device according to the present invention executes direct prediction using a reference image space beyond a common range for motion estimation, retrieving pixel data from an external memory or an internal broad cache memory. Thereby, it is possible to expand a range for intra-picture prediction almost without increasing a bandwidth for transfer between the motion estimation device and the external memory and without increasing a memory capacity of an internal memory.

The embodiments disclosed herein are merely examples and do not limit the present invention. The scope of the present invention is presented not in the above description but in Claims described below, and any modifications are possible within the scope and meanings of Claims.

### Industrial Applicability

The present invention can be used in a camcorder, a recorder, or the like supporting processing for pictures each having a large field angle such as a high-definition (HD) image size according to H.264 standard, for example.

## Claims

1. A motion estimation device that executes motion estimation for a macroblock in a current picture to be coded, using pixel data of a reference picture held in a multi-frame memory, said motion estimation device comprising:
a local memory holding a first pixel data part of the pixel data of the reference picture, the first pixel data part (i) being in a first range from which motion is estimated in first motion estimation and (ii) being read out from the multi-frame memory;
a first motion estimation unit configured to execute the first motion estimation using pixel data in the first pixel data part held in said local memory; and
a second motion estimation unit configured to execute the second motion estimation using pixel data in the pixel data of the reference picture by an algorithm different from an algorithm of the first motion estimation, the pixel data to be used in the second motion estimation being included in a second range that includes the first range and that is larger than the first range.

2. The motion estimation device according to Claim 1,
wherein said second motion estimation unit is configured to execute the second motion estimation using the pixel data in the pixel data of the reference picture held in said multi-frame memory.

3. The motion estimation device according to Claim 2, further comprising
a selection unit configured to (i) select the first pixel data part held in said local memory when the second motion estimation unit executes the second motion estimation using pixel data included in the first range, and (ii) select the pixel data of the reference picture held in the multi-frame memory when the second motion estimation unit executes the second motion estimation using pixel data that is included in the second range but not included in the first range,
wherein said second motion estimation unit is configured to execute the second motion estimation using a result of the selection of the said motion estimation unit.

4. The motion estimation device according to Claim 1, further comprising
an execution control unit configured to control said second motion estimation unit to execute or not to execute the second motion estimation.

5. The motion estimation device according to Claim 4,
wherein said execution control unit is configured to control said second motion estimation unit to execute the second motion estimation, only when at least a part of the pixel data to be used in the second motion estimation is held in said local memory.

6. The motion estimation device according to Claim 1, further comprising
a cache memory holding a second pixel data part of the pixel data of the reference picture, the second pixel data part (i) being included in the second range and (ii) being read out from the multi-frame memory,
wherein said local memory holds the first pixel data part included in the first range, the first pixel data part being read out from said cache memory, and
said second motion estimation unit is configured to execute the second motion estimation using pixel data in the second pixel data part held in said cache memory.

7. The motion estimation device according to Claim 6, further comprising
a selection unit configured to (i) select the first pixel data part held in said local memory when the second motion estimation unit executes the second motion estimation using pixel data included in the first range, and (ii) select the second pixel data part held in said cache memory when the second motion estimation unit executes the second motion estimation using pixel data that is included in the second range but not included in the first range,
wherein said second motion estimation unit is configured to execute the second motion estimation using a result of the selection of said motion estimation unit.

8. The motion estimation device according to Claim 6, further comprising
a second-motion-estimation possibility determination unit configured to determine that the second motion estimation is possible, only when the pixel data to be used in the second motion estimation is held in said cache memory,
wherein said second motion estimation unit is configured to execute the second motion estimation when said second-motion-estimation possibility determination unit determines that the second motion estimation is possible.

9. The motion estimation device according to Claim 8, further comprising
a second-motion-estimation possibility determination unit configured to determine that the second motion estimation is possible, only when the pixel data to be used in the second motion estimation is included in a predetermined part in an area of the reference picture, the area corresponding to the second pixel data part held in said cache memory.

10. The motion estimation device according to Claim 9,
wherein the predetermined part is a part of the area of the reference picture, the part being restricted vertically.

11. The motion estimation device according to Claim 9,
wherein the predetermined part is a part of the area of the reference picture, the part being restricted rightwards.

12. The motion estimation device according to Claim 9,
wherein the predetermined part is a part of the area of the reference picture, the part being restricted leftwards.

13. The motion estimation device according to Claim 9,
wherein the predetermined part is a part of the area of the reference picture, the part being restricted vertically and horizontally.

14. The motion estimation device according to Claim 6,
wherein said cache memory holds only pixel data of macroblocks included in predetermined-numbered macroblock lines from among the pixel data of the reference picture, and
pixel data of macroblocks in a top line and a bottom line of the macroblock lines held in said cache memory is updated every time a current macroblock to be processed in the first motion estimation is updated.

15. The motion estimation device according to Claim 14, further comprising
a second-motion-estimation possibility determination unit configured to determine that the second motion estimation is possible, only when the pixel data to be used in the second motion estimation is held in said cache memory,
wherein said second-motion-estimation possibility determination unit is configured to determine whether or not the second motion estimation is possible, by excluding the pixel data of the macroblocks which is updated when the current macroblock is updated.

16. The motion estimation device according to Claim 6,
wherein the second motion estimation unit is configured to execute the second motion estimation using pixel data only in the second pixel data part held in said cache memory.

17. The motion estimation device according to Claim 6,
wherein a memory capacity of said cache memory is greater than a memory capacity of said local memory and smaller than a memory capacity of the multi-frame memory.

18. The motion estimation device according to Claim 1,
wherein the second motion estimation does not require calculation of a difference between a predictive motion vector and a motion vector.

19. The motion estimation device according to Claim 18,
wherein the second motion estimation is one of direct prediction and skip prediction.

20. The motion estimation device according to Claim 1,
wherein said motion estimation device is implemented as a single chip.

21. The motion estimation device according to Claim 1, further comprising
said multi-frame memory.

22. A motion estimation method of executing motion estimation for a macroblock in a current picture to be coded, using pixel data of a reference picture held in a multi-frame memory, said motion estimation method comprising:
executing first motion estimation using pixel data in a first pixel data part held in a local memory, the first pixel data part (i) being a part of the pixel data of the reference picture, (ii) being included in a first range from which motion is estimated in the first motion estimation, and (iii) being read out from the multi-frame memory; and
executing second motion estimation using pixel data in the pixel data of the reference picture by an algorithm different from an algorithm of the first motion estimation, the pixel data used in the second motion estimation being included in a second range that includes the first range and that is larger than the first range.

23. A program for executing motion estimation for a macroblock in a current picture to be coded, using pixel data of a reference picture held in a multi-frame memory, said program causing a computer to execute:
executing first motion estimation using pixel data in a first pixel data part held in a local memory, the first pixel data part (i) being a part of the pixel data of the reference picture, (ii) being included in a first range from which motion is estimated in the first motion estimation, and (iii) being read out from the multi-frame memory; and
executing second motion estimation using pixel data in the pixel data of the reference picture by an algorithm different from an algorithm of the first motion estimation, the pixel data used in the second motion estimation being included in a second range that includes the first range and that is larger than the first range.

24. A motion estimation device that executes motion estimation for a macroblock in a current picture to be coded, using pixel data of a reference picture, said motion estimation device comprising:
a first memory holding a part of the pixel data of the reference picture, the part being included in a motion estimation range from which motion is estimated;
a second memory having a memory capacity greater than a memory capacity of the first memory and holding the pixel data of the reference picture from which the part is transferred to said first memory;
a first motion estimation unit configured to execute first motion estimation using pixel data in the part held in said first memory; and
a second motion estimation unit configured to execute second motion estimation using pixel data in the pixel data held in said second memory by an algorithm different from an algorithm of the first motion estimation.

25. A motion estimation device that executes motion estimation for a macroblock in a current picture to be coded, using pixel data of a reference picture held in a multi-frame memory, said motion estimation device comprising:
a local memory holding a part of the pixel data of the reference picture, the part (i) being data of pixels in (a) a motion estimation range from which motion is estimated and (b) an expanded range adjacent to the motion estimation range, and (ii) being read out from the multi-frame memory;
a first motion estimation unit configured to execute first motion estimation using pixel data included in the motion estimation range in said local memory; and
a second motion estimation unit configured to execute second motion estimation using pixel data included in the motion estimation range and the expanded range in said local memory, by an algorithm different from an algorithm of the first motion estimation.

26. The motion estimation device according to Claim 25,
wherein the expanded range consists of a plurality of lines of pixels and includes a pixel at center of the motion estimation range.
